# EUROPEAN PATENT APPLICATION

(11) **EP 4 471 961 A1**
(43) Date of publication of application: **04.12.2024**
(21) Application number: 22961611.5
(22) Date of filing: 09.10.2022
(51) Int. Cl.: H01M 50/358

(54) **BATTERY AND ELECTRIC APPARATUS**

(71) Applicant: Contemporary Amperex Technology Co., Limited, Ningde, Fujian 352100 (CN)
(72) Inventor: QIAN, Ou, Ningde, Fujian 352100 (CN); LI, Yao, Ningde, Fujian 352100 (CN); CHEN, Xiaobo, Ningde, Fujian 352100 (CN); YANG, Piaopiao, Ningde, Fujian 352100 (CN)
(74) Representative: Ran, Handong
(86) International application number: PCT/CN2022/124076
(87) International publication number: WO 2024/077413

(57) **Abstract**

Embodiments of the present application provide a battery and an electric apparatus. The battery (100) comprises: a box body assembly (1) internally provided with a first cavity (A) and an exhaust channel (B) which are communicated with each other, the box body assembly (1) being provided with first pressure relief components (3); battery cells (2) provided in the box body assembly (1) and located outside the first cavity (A), each battery cell (2) being provided with a second pressure relief component (21) configured to release a discharge of the battery cell (2) to the exhaust channel (B); and a first blocking component (4) provided in the first cavity (A) and configured to extend a path of the discharge from the first cavity (A) to the first pressure relief components (3).

## Description

### TECHNICAL FIELD

The present application relates to the technical field of batteries, and in particular to a battery and an electrical apparatus.

### BACKGROUND

Since lithium-ion and other batteries have the advantages of high energy density, high power density, multiple cycles, and long storage time, and the like, they have been widely used in electric vehicles. However, the improvement of the safety of batteries in electric vehicles during use has been a challenge for the industry.

### SUMMARY OF THE INVENTION

The purpose of the present application is to improve the safety of batteries during use.

According to a first aspect of the present application, a battery is provided, comprising:
a box body assembly, the box body assembly being internally provided with a first cavity and a venting channel which are in communication with each other, wherein the first cavity is provided with a first pressure relief component on a cavity wall;
a battery cell provided in the box body assembly and located outside the first cavity, the battery cell having a second pressure relief component, wherein the second pressure relief component is configured to release discharges of the battery cell into the venting channel to cause the discharges to enter the first cavity and to be discharged via the first pressure relief component to the outside of the battery; and
a first blocking component provided in the first cavity, the first blocking component being configured to prolong a path for the discharges in the first cavity to reach the first pressure relief component.

In this embodiment, by separately providing a first cavity in the box body assembly, it is possible to make the discharges released by the battery cell when thermal runaway occurs first converge into the first cavity through the venting channel, and to prolong the flow path for the discharges to reach the first pressure relief component by means of the first blocking component provided in the first cavity, so that the temperature of the discharges is gradually reduced in the flow process, and the temperature reduction effect can be improved even for the discharges released by a battery cell that is close to the first pressure relief component; moreover, after discharges of thermal runaway of different battery cells enter the first cavity for mixing, the highest temperature of the discharges decreases. As a result, such a battery facilitates the reduction of the temperature of the discharges to a level less than the kindling point of the combustible fume, thus preventing an external fire from occurring after the discharges are discharged through the first pressure relief component, thereby improving the safety of the operation of the battery.

In some embodiments, the box body assembly is further internally provided with a second cavity, the battery cell being provided in the second cavity, and the second cavity being in communication with the venting channel, or the second cavity being in communication with the venting channel in the case where the battery cell is releasing the discharges.

In this embodiment, by providing a first cavity and a second cavity independent of each other in the box body assembly and providing the battery cell in the second cavity, after the discharges enter the venting channel from the second cavity and are discharged into the first cavity, it is possible to reduce the amount of discharges that enter the region where the battery cell is located from the first cavity, which reduces the risk of short-circuiting on the electrically-connected side of the battery cell, thereby further improving the safety of the operation of the battery.

In some embodiments, the venting channel and the second cavity are independent of each other.

In this embodiment, the venting channel and the second cavity are designed as cavities that are independent of each other, so that after the discharges are released through the second pressure relief component when the battery cell undergoes thermal runaway and then pass through the first partition component to enter the venting channel, it is possible to minimize the returning of the discharges in the venting channel to the second cavity, thereby enabling a reduction of the temperature inside the second cavity, which prevents the influence on other battery cells that have not undergone thermal runaway, and prevents the high-temperature discharges from affecting the electrical connections of the battery cells.

In some embodiments, the box body assembly comprises: a first partition component, the first partition component separating the venting channel from the second cavity along a height direction of the battery.

In this embodiment, by providing the first partition component to form the venting channel and the second cavity, it is possible to cause the discharges to enter and flow in the venting channel following a predetermined path in the event of thermal runaway of the battery cell, thereby preventing the discharges from accumulating in the second cavity where the battery cell is located, which reduces the risk of short-circuiting on the electrically-connected side of the battery cell and can thus increase the safety of the operation of the battery.

In some embodiments, the first cavity and the second cavity are provided side by side along a first direction, the first direction being perpendicular to a height direction of the battery.

In this embodiment, it is possible to provide a first cavity without increasing the height of the battery and, for example, in the case of use in a vehicle, avoid increasing the mounting space of the battery along the height direction of the vehicle; furthermore, such a provision manner facilitates the arrival of the discharges entering the first cavity to the first pressure relief component, and enables the discharges in the first cavity to be smoothly discharged from the first pressure relief component after temperature reduction in the flow path prolonged by the first blocking component in the event of thermal runaway of the battery, so as to relieve the pressure in a timely manner, and since the temperature of the discharges is reduced, it is possible to reduce the likelihood of an external fire of the battery, thus improving the safety of the operation of the battery; and in addition, such a provision manner allows a majority of the battery cells to be distant from the first cavity, so that the discharges released by the second pressure relief component flow through a long distance in the venting channel, thereby further reducing the temperature reduction at the time of entering the first cavity.

In some embodiments, the box body assembly comprises: a second partition component, the second partition component separating the first cavity from the second cavity along a first direction.

In this embodiment, by providing the second partition component to form the first cavity and the second cavity, after the discharges are discharged into the first cavity through the venting channel, it is possible to minimize the amount of discharges entering the second cavity where the battery cell is located from the first cavity, which reduces the risk of short-circuiting on the electrically-connected side of the battery cell, thereby further improving the safety of the operation of the battery.

In some embodiments, along the height direction of the battery, a wall face of the box body assembly that is far from the venting channel protrudes outwardly in a region where the first cavity is located to form a first protruding portion and protrudes outwardly in a region where the second cavity is located to form a second protruding portion, with a portion of the box body assembly that is located between the first protruding portion and the second protruding portion being fixed to the second partition component.

In this embodiment, the provision of the first protruding portion provides space for the provision of an electrical connection structure on the electrode terminal side of the battery cell and the provision of a temperature collection component on the end cover body; and the provision of the second protruding portion can make the wall face of the box body assembly that is provided with the first protruding portion to maintain a planar structure as a whole, and at the same time increase the volume of the first cavity, so that more discharges can be accommodated in the first cavity and the pressure inside the first cavity can be reduced, which decreases the safety hazard caused by excessive pressure in the event of thermal runaway, and is conducive to reducing the temperature of the discharges. In addition, such a structure can improve the overall rigidity of the cover body to prevent deformation, and fixing the portion between the first protruding portion and the second protruding portion to the second partition component can increase the structural rigidity of the battery as a whole and improve the firmness of mounting, and also prevent the discharges in the first cavity from entering the second cavity and affecting the reliability of the electrical connection of the battery cell.

In some embodiments, along a height direction of the battery, a wall face of the box body assembly that is far from the venting channel protrudes outwardly in a region where the first cavity is located to form a first protruding portion.

In this embodiment, the provision of the first protruding portion provides space for the provision of an electrical connection structure on the electrode terminal side of the battery cell and the provision of a temperature collection component on the end cover body.

In some embodiments, along a height direction of the battery, a wall face of the box body assembly that is far from the venting channel protrudes outwardly in a region where the second cavity is located to form a second protruding portion.

In this embodiment, the provision of the second cavity protruding portion can increase the volume of the first cavity, so that more discharges can be accommodated in the first cavity and the pressure inside the first cavity can be reduced, which decreases the safety hazard caused by excessive pressure in the event of thermal runaway, and is conducive to reducing the temperature of the discharges.

In some embodiments, the venting channel is provided in the second cavity.

In this embodiment, the venting channel is provided in the second cavity, so that there is no need for separation by the first partition component, thereby simplifying the internal structure of the battery, and the discharges released through the second pressure relief component of the battery cell directly enter the venting channel and then directly enter the first cavity through the venting channel, which provision structure can make the process of the discharges entering the venting channel through the second pressure relief component smoother, and can reduce the pressure after the discharges are released through the second pressure relief component in order to prevent transient high pressure from occurring, thereby improving the safety of the battery after thermal runaway occurs.

In some embodiments, the box body assembly comprises: a second partition component configured to partition the space in the box body assembly into the first cavity and the second cavity, wherein there is a preset gap between a first end of the second partition component that is close to the venting channel along a height direction of the battery and a first end of the box body assembly that is located on the same side. In this embodiment, a preset gap is provided between the first end of the second partition component along the height direction of the battery and the first end of the box body assembly that is located on the same side, so that in the event of thermal runaway of the battery cell, the discharges smoothly enter the first cavity from the second cavity through the preset gap, which can prevent the pressure in the second cavity from being too high, thereby improving safety in the event of thermal runaway.

In some embodiments, the second pressure relief component is provided facing the first end of the box body assembly, with the venting channel being formed between the battery cell and the first end of the box body assembly.

In this embodiment, the venting channel is provided in the second cavity without separating the venting channel from the second cavity, which allows the discharges to spread quickly from the second cavity into the venting channel in the event of thermal runaway of the battery cell in order to instantly reduce the pressure in the second cavity, thereby improving safety in the event of thermal runaway.

In some embodiments, the first blocking component comprises a baffle, the baffle being configured to cause airflow to bypass an edge of the baffle to reach the first pressure relief component.

In this embodiment, by providing a baffle as the blocking component, the airflow is made to bypass the edge when passing through the baffle to form a meandering flow path instead of directly reaching the first pressure relief component, thereby prolonging the flow path for the airflow to reach the first pressure relief component, which facilitates reducing the temperature of the discharges to a level less than the kindling point of the combustible fume, thus preventing an external fire from occurring after the discharges are discharged through the first pressure relief component. Moreover, on the basis of playing a blocking role, the baffle can reduce the occupied space so as to maximize the space in the first cavity for accommodating the discharges, thus reducing the pressure in the first cavity in the event of thermal runaway of the battery cell, thereby improving the safety of the operation of the battery.

In some embodiments, the box body assembly comprises a plurality of side walls, and the first blocking component comprises a baffle, with one end of the baffle being connected to one of the side walls and the other end of the baffle being a free end.

In this embodiment, the connection of one end of the baffle to the side wall enables the baffle to be mounted more securely, and by means of the connection with the side wall, the flow of the discharges through this side is blocked so that the discharges can only bypass the free end of the baffle to reach the first pressure relief component, which can guide the flow of the discharges in accordance with a predetermined path to achieve the purpose of prolonging the flow path.

In some embodiments, the first cavity and a region where the battery cell is located are provided side by side along a first direction, and the first blocking component comprises at least two baffles arranged spaced apart along the first direction, two adjacent ones of the baffles being provided in a misaligned manner along a second direction, with the second direction being perpendicular to the first direction.

In this embodiment, by providing at least two baffles on the flow path of the discharges and providing two adjacent baffles in a misaligned manner, the discharges can be guided to form a meandering flow path, which further prolongs the path for the discharges in the first cavity to reach the first pressure relief component and reduces the amount of discharges directly reaching the first pressure relief component, thereby gradually lowering the temperature of the discharges during the flow process, which facilitates lowering the temperature of the discharges to a level less than the kindling point of the combustible fume, thus preventing an external fire from occurring after the discharges are discharged through the first pressure relief component, thereby improving the safety of the operation of the battery.

In some embodiments, at least two first pressure relief components are provided.

In this embodiment, by providing at least two first pressure relief components, it is possible that if one of the first pressure relief components fails to open reliably, the discharges can still be released to the outside of the box body assembly through the other first pressure relief components, thereby increasing the reliability of pressure relief, and if the plurality of first pressure relief components can all be opened reliably, the discharges can be released simultaneously through the plurality of first pressure relief components, so that the air pressure inside the box body assembly can be reduced instantly to prevent the box body assembly from expanding, and the speed at which the discharges are discharged can be reduced, so as to prevent the discharges from causing a large impact on other components outside the battery.

In some embodiments, the first pressure relief component is provided on a cavity wall of the first cavity that is far from the battery cell.

In this embodiment, the first pressure relief component is located at a position far from the region in which the battery cell is placed, so that after the discharges enter the first cavity through the venting channel in the event of thermal runaway of the battery cell, they will flow in a direction away from the battery cell to reach the first pressure relief component, which minimizes the impact of the high-temperature discharges on the battery cell.

In some embodiments, the box body assembly comprises a plurality of side walls, and the first pressure relief component is provided on the side wall of the first cavity that is opposite a region where the battery cell is located.

In this embodiment, the first pressure relief component is provided on a side wall far from the region where the battery cell is located, so that after the discharges enter the first cavity through the venting channel in the event of thermal runaway of the battery cell, they will flow in a direction away from the battery cell to reach the first pressure relief component, which minimizes the impact of the high-temperature discharges on the battery cell; moreover, the side wall has a higher strength, and there is also sufficient space to dispose the first pressure relief component.

In some embodiments, at least two first pressure relief components are provided, the at least two first pressure relief components being provided spaced apart along a second direction, the second direction being perpendicular to a height direction of the battery.

In this embodiment, at least two first pressure relief components are provided spaced apart along the second direction, so that if the pressure inside the box body assembly is too high, the discharges can be released to the outside of the battery simultaneously through the at least two first pressure relief components, which can rapidly reduce the temperature and the pressure inside the battery, thereby improving the safety of the battery; moreover, each pressure relief component may correspond to a battery cell in a different region, which can reduce the pressure of the discharges released from each pressure relief component, thereby reducing the impact and damage to other components outside the battery after the discharges are released. In some embodiments, the first blocking component comprises: at least two baffle groups provided in correspondence with the at least two first pressure relief components, respectively, each of the baffle groups comprising:
a first plate, a first end of the first plate being connected to a region of the side wall that is located between two adjacent ones of the first pressure relief components, and a second end of the first plate being a free end; and
a second plate provided along a first direction on a side of the first plate that is far from the first pressure relief components, a first end of the second plate being connected to the side wall, and a second end of the second plate being a free end,
wherein the first plate and the second plate are provided in a misaligned manner in the second direction and have overlapping segments.

In this embodiment, the baffle groups can guide the discharges to form meandering flow paths and flow to corresponding first pressure relief components, so that the discharges entering the first cavity can be distributed to flow towards the at least two first pressure relief components, which can prevent the local pressure in the first cavity from being too high and help reduce the temperature of the discharges, thus preventing an external fire from occurring after the discharges are discharged through the first pressure relief components, thereby improving the safety of the operation of the battery.

In some embodiments, the second end of the first plate extends beyond a corresponding one of the first pressure relief components along the second direction; and/or the second end of the second plate extends beyond a corresponding one of the first pressure relief components along the second direction.

In this embodiment, the projection of the first plate and/or the second plate on the wall where the first pressure relief component is provided covers the first pressure relief component, which can reliably prevent the discharges in the first cavity from reaching the first pressure relief component directly, so that the discharges need to bypass the free ends of the first plate and the second plate to reach the first pressure relief component, thereby forming a meandering flow path, and by prolonging the flow path of the discharges, the temperature of the discharges can be reduced.

In some embodiments, the first end of the first plate and the first end of the second plate are separately connected to adjacent ones of the side walls.

In this embodiment, by providing the first plate between two adjacent first pressure relief components, it can serve a blocking function and also facilitate mounting of the second plate, which can simplify the structure of the second plate.

In some embodiments, the first plate is in an L-shape, and two adjacent ones of the first plates are provided spaced apart or in contact along the second direction.

In this embodiment, the first plate can not only be conveniently connected to the side wall, but also define the flow path for the discharges together with the second plate.

In some embodiments, at least one end of the first blocking component along the height direction of the battery is abutted against the box body assembly.

In this embodiment, it is possible to avoid direct arrival of a portion of the discharges to the first pressure relief component from the end portion of the first blocking component that is along the height direction of the battery, and to enable a vast portion of the discharges in the first cavity to flow to the first pressure relief component under the guidance of the first blocking component, thus making it possible to ensure prolonging a flow path for the discharges in the first cavity to reach the first pressure relief component in order to gradually reduce the temperature of the discharges during the flow process, which facilitates the reduction of the temperature of the discharges to a level less than the kindling point of the combustible fume, thus preventing an external fire from occurring after the discharges are discharged through the first pressure relief component, thereby improving the safety of the operation of the battery.

In some embodiments, further comprising a second blocking component provided in the venting channel, the second blocking component being configured to prolong a flow path for the discharges in the venting channel.

In this embodiment, by providing a second blocking component in the venting channel, it is possible to prolong the flow path for the discharges in the venting channel to further reduce the temperature of the discharges, which facilitates the reduction of the temperature of the discharges to a level less than the kindling point of the combustible fume, thus preventing an external fire from occurring after the discharges are discharged through the first pressure relief component, thereby improving the safety of the operation of the battery.

In some embodiments, the box body assembly comprises: a first partition component, the first partition component separating the venting channel from the second cavity along a height direction of the battery; and the battery further comprises a support member provided in the venting channel, the support member being configured to support the first partition component.

In this embodiment, by providing the support member in the venting channel, it is possible to jointly provide good support to the first partition component, so as to prevent the first partition component from deforming, thereby providing a good support effect to the battery cell placed on the first partition component. Moreover, the support member may also function as a second blocking component that may enable temperature reduction of the discharges as they flow in the venting channel.

In some embodiments, the battery further comprises a cooling component provided in the box body assembly, the cooling component being configured to absorb heat in the box body assembly.

In this embodiment, by providing a cooling component, it is possible to actively absorb heat in the box body assembly, so as to reduce the temperature of the discharges during the flow process in the case of thermal runaway of the battery cell, thus preventing an external fire from occurring after the discharges are discharged through the first pressure relief component, thereby improving the safety of the operation of the battery.

In some embodiments, the cooling component is provided in at least one of the venting channel and the first cavity.

In this embodiment, by providing the cooling component in the venting channel, it is possible to enable temperature reduction of the discharges after they enter the venting channel in the event of thermal runaway of the battery cell, which can reduce the impact of the high-temperature discharges on other battery cells that have not experienced thermal runaway; and by providing the cooling component in the first cavity, it is possible to realize temperature reduction by the cooling component while prolonging the flow path after the discharges are accumulated into the first cavity in the event of thermal runaway of the battery cell, so that rapid cooling of the discharges in the first cavity can be realized.

In some embodiments, the cooling component comprises an encapsulation member and a cooling medium provided in the encapsulation member, the cooling medium being configured to absorb heat by means of phase transition.

In this embodiment, temperature reduction is conducted by means of phase transition and heat absorption of the cooling medium, which enables rapid temperature reduction inside the battery, and the cooling medium is provided inside the encapsulation member, and thus can avoid any influence on the operation of the battery cell.

In some embodiments, the battery further comprises a filtering component provided in the box body assembly at a position corresponding to the first pressure relief component, the filtering component being configured to filter the discharges before they are discharged through the first pressure relief component.

In this embodiment, in the event of thermal runaway of the battery cell, by filtering solid particles from the discharges with the filtering component before the discharges reach the first pressure relief component, it is possible to prevent the solid particles in the discharges from blocking the first pressure relief component, thereby improving the safety of the operation of the battery.

In some embodiments, the filtering component comprises: an accommodating member, the accommodating member being mounted in the box body assembly, the accommodating member having a cavity and being provided with a plurality of through holes in a wall face, and the plurality of through holes being configured to cause the discharges to enter the cavity after filtered.

In this embodiment, solid particles in the discharges that are larger in size than the through holes can be filtered out to remain outside the accommodating member, which can prevent large-sized solid particles from blocking the first pressure relief component, thereby improving the safety of the operation of the battery.

In some embodiments, the filtering component further comprises: an adsorption member provided in the cavity, the adsorption member being configured to adsorb solid particles from the discharges in the cavity. In this embodiment, after the discharges enter the cavity through the through holes on the accommodating member, solid particles that are larger in size than the through holes are filtered out to remain outside the accommodating member, while solid particles that are smaller in size than the through holes are adsorbed through the adsorption member, thereby preventing the high-temperature solid particles from blocking the first pressure relief component as much as possible, thus improving the safety of the operation of the battery. According to a second aspect of the present application, an electrical apparatus is provided comprising a battery of the embodiments described above, the battery being used to provide electrical energy to the electrical apparatus.

### BRIEF DESCRIPTION OF THE DRAWINGS

In order to illustrate the technical solutions of the embodiments of the present application more clearly, the drawings required in the embodiments of the present application are briefly introduced below. Obviously, the drawings described below are only some embodiments of the present application. For those of ordinary skill in the art, other drawings can also be obtained according to the drawings without any creative efforts.
FIG. 1 is a structural schematic diagram of some embodiments in which a battery is mounted to a vehicle in the present application.
FIG. 2 is an exploded view of a first embodiment of a battery in the present application.
FIG. 3 is a top view of the first embodiment of the battery in the present application.
FIG. 4 is a cross-sectional exploded view of the first embodiment of the battery in the present application sectioned in a plane perpendicular to a second direction y.
FIG. 5 is a cross-sectional view of the first embodiment of the battery in the present application sectioned in a plane perpendicular to the second direction y.
FIG. 6 is an exploded view of a battery cell in the first embodiment.
FIG. 7 is a structural schematic diagram of a case in FIG. 6.
FIG. 8 is an exploded view of a second embodiment of the battery in the present application.
FIG. 9 is a cross-sectional exploded view of the second embodiment of the battery in the present application sectioned in a plane perpendicular to the second direction y.
FIG. 10 is a cross-sectional view of the second embodiment of the battery in the present application sectioned in a plane perpendicular to the second direction y.
FIG. 11 is an exploded view of a third embodiment of the battery in the present application.
FIG. 12 is a cross-sectional exploded view of the third embodiment of the battery in the present application sectioned in a plane perpendicular to the second direction y.
FIG. 13 is a cross-sectional view of the third embodiment of the battery in the present application sectioned in a plane perpendicular to the second direction y.
FIGS. 14A to 14D are structural schematic diagrams of four support members, respectively.
FIG. 15 is an exploded view of a fourth embodiment of the battery in the present application.
FIG. 16 is a cross-sectional view of the fourth embodiment of the battery in the present application sectioned in a plane perpendicular to a first direction x.
FIG. 17 is a structural schematic diagram of some embodiments in which second blocking components are provided in a venting channel.
FIG. 18 is a structural schematic diagram of some embodiments of a filtering component in the battery of the present application.
FIG. 19 is a structural schematic diagram of some embodiments of an adsorption member in FIG. 18.

In the accompanying drawings, the accompanying drawings are not drawn to actual scale.

Description of reference numerals:
100, battery; 1, box body assembly; 11, accommodating portion; 11A, side wall; 12, first cover body; 12A, bottom wall; 121, third protruding portion; 122, fourth protruding portion; 13, second cover body; 13A, top wall; 131, first protruding portion; 132, second protruding portion; 14, first partition component; 141, first venting portion; 15, second partition component; 16, third partition component; 2' battery module; 2, battery cell; 20, case; 21, second pressure relief component; 22, electrode assembly; 221, first tab; 222, second tab; 23, adapter; 24, end cover assembly; 241, end cover body; 242, electrode terminal; 3, first pressure relief component; 4, first blocking component; 4A, baffle; 4B, baffle group; 41, first plate; 42, second plate; 5, support member; 51, second blocking component; 52, second venting portion; 6, cooling component; 7, filtering component; 71, accommodating member; 711, through hole; 72, adsorption member;
A, first cavity; B, venting channel; C, second cavity; x, first direction; y, second direction; z, height direction;
200, vehicle; 201, axle; 202, wheel; 203, motor; 204, controller.

### DETAILED DESCRIPTION

Embodiments of the present application are described in further detail below in conjunction with the drawings and embodiments. The following detailed description of the embodiments and the drawings are configured to illustrate the principles of the present application by way of example, but should not be configured to limit the scope of the present application, that is, the present application is not limited to the described embodiments.

In the description of the embodiments of the present application, the term "a plurality of refers to two or more (including two), and similarly, "a plurality of groups" refers to two or more (including two) groups, and "a plurality of sheets" refers to two or more (including two) sheets.

The orientation or positional relationships indicated by the terms "upper", "lower", "top", "bottom", "front", "rear", "inner", "outer" and the like are used in the present application only for facilitating the description of the present application, rather than indicating or implying that the device referred to must have a particular orientation or be constructed and operated in a particular orientation, and therefore shall not be interpreted as limiting the protection scope of the present application.

In addition, the terms "first", "second" and "third" are used for descriptive purposes only, and cannot be construed as indicating or implying relative importance. "Perpendicular" is not strictly perpendicular, but within the allowable range of errors. "Parallel" is not strictly parallel, but within the allowable range of errors. Orientation words appearing in the following description are all directions shown in the drawings, and do not limit the specific structure of the present application.

In the description of the present application, it should also be noted that, unless otherwise expressly specified and limited, the terms "mount," "connected," and "connecting" should be broadly understood, for example, they may be a fixed connection or a detachable connection or be an integrated connection; or may be a direct connection or an indirect connection through an intermediate medium. For those of ordinary skill in the art, the specific meanings of the above terms in the present application may be understood according to specific circumstances.

Reference herein to "an embodiment" means that a particular feature, structure, or characteristic described in conjunction with the embodiment can be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

The battery cell may include a lithium-ion secondary battery, a lithium-ion primary battery, a lithium-sulfur battery, a sodium-lithium-ion battery, a sodium-ion battery, a magnesium-ion battery, or the like, which will not be limited in the embodiments of the present application. The battery cell may be in a cylindrical shape, a flat shape, a cuboid shape or another shape, which is also not limited in the embodiments of the present application. The battery cells are generally classified into three types depending on the encapsulating manners: cylindrical battery cells, prismatic cells battery and pouch battery cells, which is also not limited in the embodiments of the present application.

Current battery cells usually include a case and an electrode assembly accommodated in the case, and the case is filled with electrolyte. The electrode assembly is mainly formed by stacking or winding a first electrode plate and a second electrode plate of opposite polarities, and an insulating member, for example, a separator, or the like, is usually provided between the first electrode plate and the second electrode plate. The portions of the first electrode plate and the second electrode plate coated with active material constitute a main body part of the electrode assembly, and the portions of the first electrode plate and the second electrode plate not coated with the active material respectively constitute a first tab and a second tab. In a lithium-ion battery, the first electrode plate may be a positive electrode plate, including a positive current collector and a positive electrode active material layer arranged on both sides of the positive current collector. The material of the positive current collector may be, for example, aluminum, and the positive electrode active material may be, for example, lithium cobalt oxide, lithium iron phosphate, ternary lithium, lithium manganate, or the like. The second electrode plate may be a negative electrode plate, including a negative current collector and a negative electrode active material layer arranged on both sides of the negative current collector. The material of the negative current collector may be, for example, copper, and the negative electrode active material may be, for example, graphite, silicon or the like. Optionally, the first electrode plate may also be a negative electrode plate, and accordingly the second electrode plate may be a positive electrode plate. The first tab and the second tab may be located at one end of the main body part jointly or at two ends of the main body part respectively. In the charging and discharging process of the battery cell, the positive electrode active material and the negative electrode active material react with the electrolyte, and the tabs are connected to the terminals to form a current loop.

The pressure relief component of the battery cell refers to an element or component that is actuated to relieve the internal pressure or temperature of a battery cell when the internal pressure or temperature reaches a predetermined threshold value. The threshold design varies according to different design requirements. The threshold may depend on the material of one or a plurality of the positive electrode plate, the negative electrode plate, the electrolyte solution, and the separator in the battery cell. The pressure relief component may take the form of an explosion-proof valve, a gas valve, a pressure relief valve, a safety valve, or the like, and may specifically adopt a pressure-sensitive or temperature-sensitive element or structure. That is, when the internal pressure or temperature of the battery cell reaches a predetermined threshold, the pressure relief component performs an action or a weak structure arranged in the pressure relief component is damaged, so as to form an opening or channel for releasing the internal pressure or temperature of the battery cell.

The "actuate" mentioned herein means that the pressure relief component performs an action or is activated to a certain state, so that the internal pressure and temperature of the battery cell can be relieved. The action performed by the pressure relief component may include, but is not limited to: at least part of the pressure relief component being broken, crushed, torn, opened, or the like. When the pressure relief component is actuated, internal discharges from the battery cell are discharged outward from the actuated part. In this way, the pressure and temperature of the battery cell can be relieved under controllable pressure or temperature, so as to prevent potential more serious accidents.

Among other things, the discharges from the battery cell referred to herein comprise, but are not limited to, the electrolyte, dissolved or split positive and negative electrode plates, fragments of the separator, high-temperature and high-pressure gases generated by the reaction (e.g., combustible gases such as CH4, CO, and the like), flames, and the like.

A pressure relief component of a battery is an element or component that is actuated to relieve the internal pressure or temperature of a box body assembly of the battery when the internal pressure or temperature reaches a predetermined threshold. The threshold design varies according to different design requirements. The threshold may depend on the pressure or temperature of the discharges released from the battery cell. The pressure relief component may take the form of an explosion-proof valve, a gas valve, a pressure relief valve, a safety valve, or the like, and may specifically adopt a pressure-sensitive or temperature-sensitive element or structure. That is, when the internal pressure or temperature of the box body assembly of the battery reaches a predetermined threshold, the pressure relief component performs an action or a weak structure arranged in the pressure relief component is damaged, so as to form an opening or channel for releasing the internal pressure or temperature of the box body assembly.

The "actuate" mentioned herein means that the pressure relief component performs an action or is activated to a certain state, so that the internal pressure and temperature of the box body assembly of the battery can be relieved. The action performed by the pressure relief component may include, but is not limited to: at least part of the pressure relief component being broken, crushed, torn, opened, or the like. When the pressure relief component is actuated, internal discharges from the box body assembly of the battery are discharged outward from the actuated part. In this way, the pressure and temperature of the battery can be relieved under controllable pressure or temperature, so as to prevent potential more serious accidents.

Current batteries are subject to poor safety problems during use. The inventors have found through research that the main reason for the poor safety of the battery is that, for a battery with high specific energy, after thermal runaway occurs, following pressure relief from the pressure relief component of the battery cell, the temperature of the thermal runaway fumes is very high, usually greater than 1000°C, accompanied by a large amount of high-temperature active materials being discharged from the pressure relief component. These high-temperature fumes and high-temperature active materials are first discharged to the interior of the battery through the pressure relief component of the battery cell. For a battery cell that is close to the pressure relief component of the battery, the high-temperature fumes are discharged through the pressure relief component of the battery, and they are still at a high temperature, which makes it possible to reach the kindling point of the combustible fumes, leading to a fire occurring outside of the battery after the thermal runaway of the battery.

In accordance with the foregoing analysis, the inventors recognize that the key to solving the safety problems of the batteries due to external fires is to reduce the temperature of the high-temperature fumes and active materials in the battery to a level below the kindling point of the combustible fumes, and in particular to reduce the temperature of the discharges of the battery cells that are in close proximity to the pressure relief component of the battery.

Based on such an improvement idea, the present application proposes an improved battery comprising: a box body assembly, the box body assembly being internally provided with a first cavity and a venting channel which are in communication with each other, wherein the first cavity is provided with a first pressure relief component on a cavity wall; a battery cell provided in the box body assembly and located outside the first cavity, the battery cell having a second pressure relief component, wherein the second pressure relief component is configured to release discharges of the battery cell into the venting channel to cause the discharges to enter the first cavity and to be discharged via the first pressure relief component to the outside of the battery; and a first blocking component provided in the first cavity, the first blocking component being configured to prolong a path for the discharges in the first cavity to reach the second pressure relief component.

In this embodiment, by separately providing a first cavity in the box body assembly, it is possible to make the discharges released by the battery cell when thermal runaway occurs first converge into the first cavity through the venting channel, and to prolong the flow path for the discharges to reach the first pressure relief component by means of the first blocking component provided in the first cavity, so that the temperature of the discharges is gradually reduced in the flow process, and the temperature reduction effect can be improved even for the discharges released by a battery cell that is close to the first pressure relief component. The battery of embodiments of the present application may be used in an electrical apparatus. The electrical apparatus may be a battery vehicle, an electric car, a ship, or a spacecraft, among others. For example, the spacecraft comprises an airplane, a rocket, a space shuttle, a spacecraft, and the like.

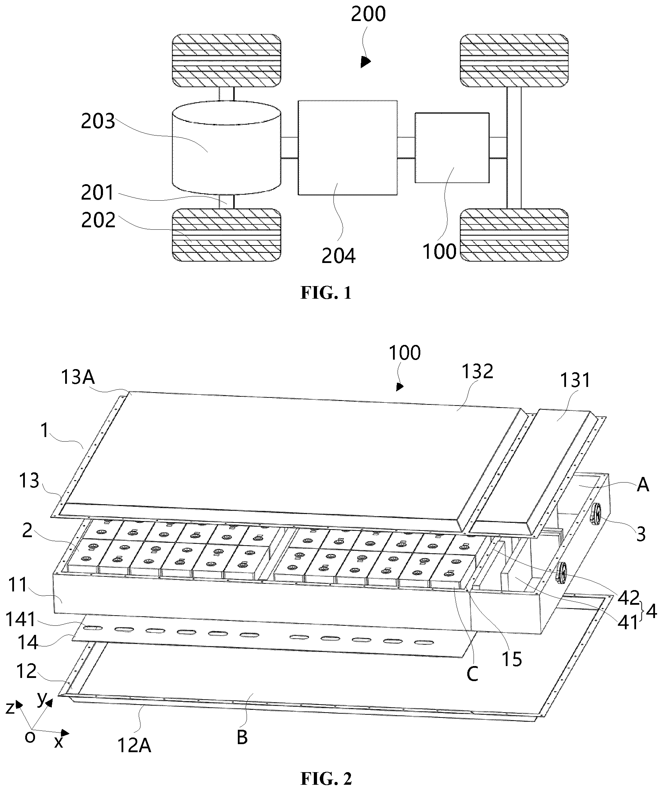

As shown in Fig. 1, the electrical apparatus may be a vehicle 200, such as a new energy vehicle, which may be a purely electric vehicle, a hybrid vehicle, or an extended range electric vehicle, and the like; or the electrical apparatus may be a drone or a ship, and the like. Specifically, the vehicle 200 may comprise an axle 201, wheels 202 connected to the axle 201, a motor 203, a controller 204, and a battery 100, wherein the motor 203 is used to drive the axle 201 to rotate, and the controller 204 is used to control the operation of the motor 203, and the battery 100 may be provided at the bottom, the head, or the rear part of the vehicle 200 for use in providing electrical energy for the operation of the motor 203, as well as for that of other components in the vehicle.

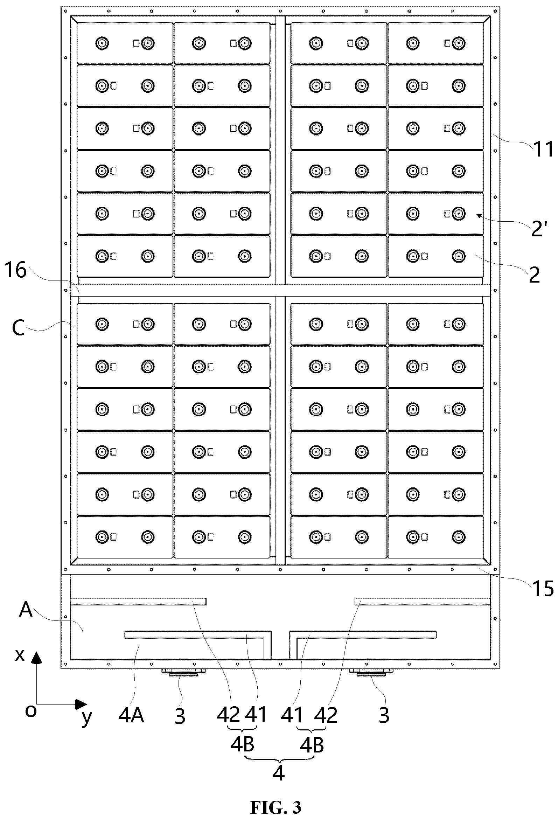

In some embodiments, as shown in FIGS. 2 and 3, the present application provides a battery 100 comprising: a box body assembly 1, the box body assembly 1 being internally provided with a first cavity A and a venting channel B which are in communication with each other, wherein the first cavity A is provided with a first pressure relief component 3 on a cavity wall; a battery cell 2 provided in the box body assembly 1 and located outside the first cavity A, the battery cell 2 having a second pressure relief component 21 configured to release discharges of the battery cell 2 into the venting channel B to cause the discharges to enter the first cavity A and to be discharged via the first pressure relief component 3 to the outside of the battery 100; and a first blocking component 4 provided in the first cavity A, the first blocking component 4 being configured to prolong a path for the discharges in the first cavity A to reach the first pressure relief component 3.

Among them, the box body assembly 1 is internally hollow for accommodating one or more battery cells 2, and the box body assembly 1 may also have dimensions of different shapes according to the shape, the number, the way of combination, and other requirements of the accommodated battery cells 2. As shown in FIG. 2, the box body assembly 1 may comprise: an accommodating portion 11, a first cover body 12, and a second cover body 13, wherein the accommodating portion 11 has openings at two opposite ends and the first cover body 12 and the second cover body 13 are used to close the openings at the two ends of the accommodating portion 11, respectively. In FIG. 2, the accommodating portion 11 is in the form of a rectangular cylinder structure according to the arrangement of the plurality of battery cells 2. Optionally, the accommodating portion 11 and the first cover body 12 form an integral structure as a box body. The first cover body 12 may be a bottom cover and have a bottom wall 12A, and the second cover body 13 may be a top cover and have a top wall 13A.

The number of battery cells 100 may be one or a plurality. If the number of battery cells 100 is a plurality, the plurality of battery cells 100 may be connected in series or in parallel or in mixed connection, wherein the mixed connection means that the plurality of battery cells 100 are connected both in series and in parallel, and it may be that a plurality of battery cells 100 are first connected in series or in parallel or in mixed connection to form a battery module 2', and a plurality of battery modules 2' are then connected in series or in parallel or in mixed connection to form an integrated whole and accommodated in the box body assembly 1. It may also be that all the battery cells 2 are directly connected in series or in parallel or in mixed connection, and then the integrated whole composed of all the battery cells 2 is accommodated in the box body assembly 1.

As shown in FIG. 3, in the case where a plurality of battery modules 2' are provided in the box body assembly 1, the box body assembly 1 comprises a third partition component 16, wherein the third partition component 16 is disposed in the accommodating portion 11 for use in separating a region where the battery cells 2 are placed in the box body assembly 1 into a plurality of accommodating cavities, with the plurality of battery modules 2' being provided in one-to-one correspondence within the plurality of accommodating cavities. For example, the two third partition components 16 are in a criss-cross structure and a total of four battery modules 2' are provided. For example, the third partition component 16 may be a solid beam or a hollow beam.

The box body assembly 1 is internally provided with a first cavity A and a venting channel B that are in communication with each other, and a wall of the box body assembly 1 that corresponds to the first cavity A is provided with at least one first pressure relief component 3. For example, the first pressure relief component 3 may be provided on a side wall of the accommodating portion 11 that corresponds to the first cavity A, and the first cavity A is a separate cavity and the battery cell 2 is located outside the first cavity A. In the event of thermal runaway of the battery cell 2, the discharges released within the battery cell 2 through the second pressure relief component 21 enter the venting channel B and reach the first cavity A through the venting channel B, wherein the first blocking component 4 is capable of prolonging a path for the discharges flowing from the venting channel B into the first cavity A to reach the first pressure relief component 3. For example, the first blocking component 4 may be a guide member such as a baffle 4A, a baffle post, and the like, provided within the first cavity A for guiding the flow of the discharges along a meandering path, so as to prevent the discharges from reaching the first pressure relief component 3 along a short path such as a straight line, for example.

In this embodiment, by separately providing a first cavity A in the box body assembly 1, it is possible to make the discharges released by the battery cell 2 when thermal runaway occurs first converge into the first cavity A through the venting channel B, and to prolong the flow path for the discharges to reach the first pressure relief component 3 by means of the first blocking component 4 provided in the first cavity A, so that the temperature of the discharges is gradually reduced in the flow process, and the temperature reduction effect can be improved even for the discharges released by a battery cell 2 that is close to the first pressure relief component 3; moreover, after discharges of thermal runaway of different battery cells 2 enter the first cavity A for mixing, the highest temperature of the discharges decreases. As a result, such a battery 100 facilitates the reduction of the temperature of the discharges to a level less than the kindling point of the combustible fume, thus preventing an external fire from occurring after the discharges are discharged through the first pressure relief component 3, thereby improving the safety of the operation of the battery 100.

Moreover, by providing the battery cell 2 in a region other than the first cavity A, after the discharges are discharged into the first cavity A through the venting channel B, it is possible to minimize the amount of discharges entering the region where the battery cell 2 is located from the first cavity A, which reduces the risk of short-circuiting on the electrically-connected side of the battery cell 2, thereby further improving the safety of the operation of the battery 100.

In addition, the provision of the first pressure relief component 3 in the cavity wall of the first cavity A enables the discharges in the first cavity A to be discharged directly through the first pressure relief component 3 after passing through the first blocking component 4, without the need to provide an additional guiding channel between the first pressure relief component 3 and the first cavity A, which can simplify the internal structure of the battery 100, and can leave more space in the second cavity C for the provision of the battery cell 2, thereby making the internal structure of the battery 100 more compact.

In some embodiments, the box body assembly 1 is further internally provided with a second cavity C, the battery cell 2 being provided in the second cavity C, and the second cavity C being in communication with the venting channel B, or the second cavity C being in communication with the venting channel B in the case where the battery cell 2 is releasing the discharges.

Among them, the first cavity A and the second cavity C are two separate cavities, which can reduce the amount of discharges in the first cavity A entering the second cavity C. The second pressure relief component 21 may be provided facing the venting channel B.

In one structural form, as shown in FIGS. 2 to 7, the second pressure relief component 21 is located at the bottom of the battery cell 2 and the venting channel B is located at the bottom of the battery cell 2, and a first partition component 14 may be provided between the second cavity C and the venting channel B to support the battery cell 2, wherein on the first partition component 14, a first venting portion 141 may be provided in correspondence with the second pressure relief component 21 of the battery cell 2 to allow discharges released through the second pressure relief component 21 to enter the venting channel B. For example, there is provided a plurality of battery cells 2, and there is also provided a plurality of first venting portions 141, the plurality of first venting portions 141 being provided in one-to-one correspondence with the plurality of battery cells 2.

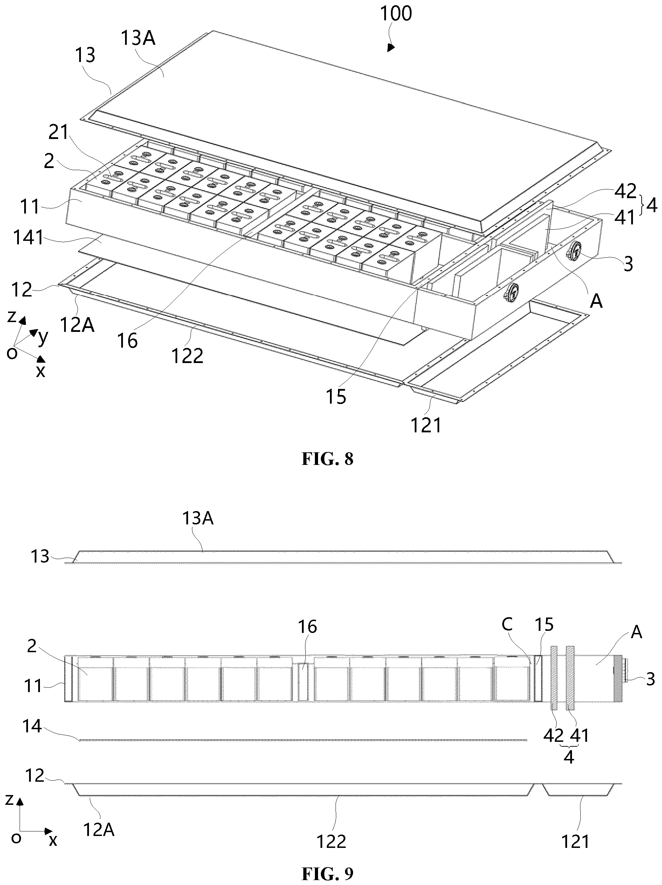

Optionally, the first cavity 141 is a through hole, then the second cavity C keeps in communication with the venting channel B. Alternatively, the first venting portion 141 is a weak portion that may be damaged under the effect of high temperature or high pressure, so that in the case of normal operation of the battery cell 2, the second cavity C and the venting channel B are not in communication and are separated by the first partition component 14; whereas in the case of thermal runaway of the battery cell 2 in which discharges are released, the weak portion may be damaged by the high-temperature discharges to form a through hole so that the second cavity C and the venting channel B are in communication in the case where the battery cell 2 is releasing discharges. For example, the first venting portion 141 may be round, oval, oblong, or polygonal, or the like. In other embodiments, the second pressure relief component 21 is located at the top of the battery cell 2 and the venting channel B is located at the top of the battery cell 2, as shown in FIGS. 8 to 10, wherein the second cavity C and the venting channel B may be provided with a first partition component 14 between them, or may be directly in communication without the first partition component 14.

For example, the first partition component 14 may be in the form of a plate-like structure, wherein the plate-like structure may be a solid plate or a hollow plate, or the plate-like structure is a thermal management component having flow channels for the flow of a gas or liquid medium for achieving heat exchange between the heat exchange medium and the space within the box body assembly 1 so as to cool or heat the battery cell 2.

In one structural form, as shown in FIGS. 8 to 10, the second pressure relief component 21 is located at the top of the battery cell 2 and the venting channel B is located at the top of the battery cell 2, and the second cavity C is in communication with the venting channel B at all times.

In this embodiment, by providing a first cavity A and a second cavity C independent of each other in the box body assembly 1 and providing the battery cell 2 in the second cavity C, after the discharges enter the venting channel B from the second cavity C and are discharged into the first cavity A, it is possible to reduce the amount of discharges that enter the region where the battery cell 2 is located from the first cavity A, which reduces the risk of short-circuiting on the electrically-connected side of the battery cell 2, thereby further improving the safety of the operation of the battery 100.

In some embodiments, the venting channel B and the second cavity C are independent of each other.

Here, "independent of each other" means that the venting channel B and the second cavity C are integrally separated by the first partition component 14, and the venting channel B and the second cavity C may be completely isolated, or the first partition component 14 may be provided with through holes to allow the venting channel B to be partially in communication with the second cavity C on the basis of the overall separation. For example, the venting channel B and the second cavity C are provided side by side along the height direction z of the battery 100.

In this embodiment, the venting channel B and the second cavity C are designed as cavities that are independent of each other, so that after the discharges are released through the second pressure relief component 21 when the battery cell 2 undergoes thermal runaway and then pass through the first partition component 14 to enter the venting channel B, it is possible to minimize the returning of the discharges in the venting channel B to the second cavity C, thereby enabling a reduction of the temperature inside the second cavity C, which prevents the influence on other battery cells 2 that have not undergone thermal runaway, and prevents the high-temperature discharges from affecting the electrical connections of the battery cells 2.

In some embodiments, the box body assembly 1 comprises: a first partition component 14, the first partition component 14 separating the venting channel B from the second cavity C along a height direction z of the battery 100.

Among them, the first partition component 14 may be perpendicular to the height direction z and connected to the side wall 11A of the box body assembly 1. For example, the first partition component 14 may be in the form of a plate-like structure, wherein the plate-like structure may be a solid plate or a hollow plate, or the plate-like structure is a thermal management component having flow channels for the flow of a gas or liquid medium for achieving heat exchange between the heat exchange medium and the space within the box body assembly 1 so as to cool or heat the battery cell 2. "Separation" in this embodiment does not mean that the communication relationship between the venting channel B and the second cavity C is completely isolated, but rather that partial communication is allowed.

In this embodiment, by providing the first partition component 14 to form the venting channel B and the second cavity C, it is possible to cause the discharges to enter and flow in the venting channel B following a predetermined path in the event of thermal runaway of the battery cell 2, thereby preventing the discharges from accumulating in the second cavity C where the battery cell 2 is located, which reduces the risk of short-circuiting on the electrically-connected side of the battery cell 2 and can thus increase the safety of the operation of the battery 100.

In some embodiments, the first cavity A and the second cavity C are provided side by side along a first direction x, the first direction x being perpendicular to a height direction z of the battery 100. Here, the first direction x may be the length direction or width direction of the battery 100.

Optionally, the first cavity A and the second cavity C may also be provided spaced apart along the height direction z of the battery 100, with the venting channel B being located between the first cavity A and the second cavity C.

In this embodiment, it is possible to provide a first cavity A without increasing the height of the battery 100 and, for example, in the case of use in a vehicle 200, avoid increasing the mounting space of the battery 100 along the height direction of the vehicle 200; furthermore, such a provision manner facilitates the arrival of the discharges entering the first cavity A to the first pressure relief component 3, and enables the discharges in the first cavity A to be smoothly discharged from the first pressure relief component 3 after being cooled down by the flow path prolonged by the first blocking component 4 in the event of thermal runaway of the battery 100, so as to relieve the pressure in a timely manner, and since the temperature of the discharges is reduced, it is possible to reduce the likelihood of a fire on the outside of the battery 100, thus improving the safety of the operation of the battery 100; and in addition, such a provision manner allows a majority of the battery cells 2 to be distant from the first cavity A, so that the discharges released by the second pressure relief component 21 flow through a long distance in the venting channel B, thereby further reducing the temperature reduction at the time of entering the first cavity A.

In some embodiments, the box body assembly 1 comprises: a second partition component 15, the second partition component 15 separating the first cavity A from the second cavity C along a first direction x.

For example, the second partition component 15 may be a solid beam or a hollow beam, and the second partition component 15 may be disposed perpendicular to the first direction x. The second partition component 15 may be connected to two opposing side walls 11A of the box body assembly 1, and may further be connected to the first partition component 14. "Separation" in this embodiment does not mean that the communication relationship between the first cavity A and the second cavity C is completely isolated, but rather that partial communication is allowed.

Specifically, as shown in FIGS. 2 to 5, the box body assembly 1 includes: a first partition component 14 and a second partition component 15, wherein the second partition component 15 partitions space in the box body assembly 1 along the first direction x into two cavities by a plane in which it is located, with one of the cavities serving as the first cavity A, and the first partition component 14 partitions the other cavity along the height direction z of the battery 100 into a second cavity C and a cavity in which the venting channel B is provided, and the second pressure relief component 21 is provided on the side of the battery cell 2 that faces the venting channel B.

For example, as shown in FIG. 2, the box body assembly 1 comprises a bottom wall 12A, a top wall 13A, and a plurality of side walls 11A, wherein the bottom wall 12A and the top wall 13A are connected to two ends of the plurality of side walls 11A along the height direction z of the battery 100, respectively. The first partition component 14 is perpendicular to the height direction z of the battery 100 and may be of a rectangular structure and, along the first direction x, the first end of the first partition component 14 is connected to the side wall 11A and the second end is connected to the second partition component 15, which means that the second edge has a preset distance from the side wall 11A; and two ends of the first partition component 14 along the second direction y are both connected to two opposing side walls 11A, the second direction y being perpendicular to the first direction x. The second partition component 15 is provided perpendicular to the first direction x, the second partition component 15 has a preset distance from the side wall 11A that is far from the battery cell 2, and a first end of the second partition component 15 can be extended to abut against the top wall 13A and a second end of the second partition component 15 can be connected to the second end of the first partition component 14 along the first direction x. For example, the components described above may be connected to each other by means of welding, bonding or fasteners. Among them, the first partition component 14, the second partition component 15, the top wall 13A, and three side walls 11A form through enclosure a second cavity C, the first partition component 14, the bottom wall 12A, and three side walls 11A form through enclosure a cavity in which the venting channel B is provided, and the second partition component 15, the bottom wall 12A, the top wall 13A, and three side walls 11A form through enclosure the first cavity A. By providing the first partition component 14 and the second partition component 15 to form the first cavity A, the venting channel B, and the second cavity C, a plurality of independent cavities can be divided to realize different functions, thereby enabling the discharges to flow in a predetermined path in the event of thermal runaway of the battery cell 2, which can improve the safety of the operation of the battery 100.

In this embodiment, by providing the second partition component 15 to form the first cavity A and the second cavity C, after the discharges are discharged into the first cavity A through the venting channel B, it is possible to minimize the amount of discharges entering the second cavity C where the battery cell 2 is located from the first cavity A, which reduces the risk of short-circuiting on the electrically-connected side of the battery cell 2, thereby further improving the safety of the operation of the battery 100.

In some embodiments, as shown in FIG. 2, along the height direction z of the battery 100, a wall face of the box body assembly 1 that is far from the venting channel B protrudes outwardly in a region where the first cavity A is located to form a first protruding portion 131 and protrudes outwardly in a region where the second cavity C is located to form a second protruding portion 132, with a portion of the box body assembly 1 that is located between the first protruding portion 131 and the second protruding portion 132 being fixed to the second partition component 15.

Among them, the wall face in this embodiment may be the top wall 13A, and both the first protruding portion 131 and the second protruding portion 132 mean that both the inner and outer surfaces of the top wall 13A protrude outwardly to form cavities inside the inner surface of the wall. The portion of the box body assembly 1 located between the first protruding portion 131 and the second protruding portion 132 may be lockably attached to the second partition component 15 by means of bolts, screws, rivets, and other fasteners. Optionally, the first protruding portion 131 and the second protruding portion 132 may also be provided separately and fixed to the second partition component 15.

In this embodiment, the provision of the first protruding portion 131 provides space for the provision of an electrical connection structure on the electrode terminal 242 side of the battery cell 2 and the provision of a temperature collection component on the end cover body 241; and the provision of the second protruding portion 132 can make the wall face of the box body assembly 1 that is provided with the first protruding portion 131 to maintain a planar structure as a whole, and at the same time increase the volume of the first cavity A, so that more discharges can be accommodated in the first cavity A and the pressure inside the first cavity can be reduced, which decreases the safety hazard caused by excessive pressure in the event of thermal runaway, and is conducive to reducing the temperature of the discharges. In addition, such a structure can improve the overall rigidity of the cover body to prevent deformation, and fixing the portion between the first protruding portion 131 and the second protruding portion 132 to the second partition component 15 can increase the structural rigidity of the battery 100 as a whole and improve the firmness of mounting, and also prevent the discharges in the first cavity A from entering the second cavity C and affecting the reliability of the electrical connection of the battery cell 2.

In some embodiments, as shown in FIG. 2, along a height direction z of the battery 100, a wall face of the box body assembly 1 that is far from the venting channel B protrudes outwardly in a region where the first cavity A is located to form a first protruding portion 131.

In this embodiment, the provision of the first protruding portion 131 provides space for the provision of an electrical connection structure on the electrode terminal 242 side of the battery cell 2 and the provision of a temperature collection component on the end cover body 241.

In some embodiments, as shown in FIG. 2, along a height direction z of the battery 100, a wall face of the box body assembly 1 that is far from the venting channel B protrudes outwardly in a region where the second cavity C is located to form a second protruding portion 132.

In this embodiment, the provision of the second cavity protruding portion 132 can increase the volume of the first cavity A, so that more discharges can be accommodated in the first cavity A and the pressure inside the first cavity A can be reduced, which decreases the safety hazard caused by excessive pressure in the event of thermal runaway, and is conducive to reducing the temperature of the discharges.

In some embodiments, as shown in FIGS. 8 to 10, the venting channel B is provided in the second cavity C.

Among them, the venting channel B is provided in the second cavity C, which is equivalent to the venting channel B occupying a part of the space in the second cavity C, and the venting channel B and the second cavity C are in communication as a whole, with no first partition component 14 provided therebetween.

In this embodiment, the venting channel B is provided in the second cavity C, so that there is no need for separation by the first partition component 14, thereby simplifying the internal structure of the battery 100, and the discharges released through the second pressure relief component 21 of the battery cell 2 directly enter the venting channel B and then directly enter the first cavity A through the venting channel B, which provision structure can make the process of the discharges entering the venting channel B through the second pressure relief component 21 smoother, and can reduce the pressure after the discharges are released through the second pressure relief component 21 in order to prevent transient high pressure from occurring, thereby improving the safety of the battery 100 after thermal runaway occurs.

In some embodiments, as shown in FIGS. 8 to 10, the box body assembly 1 comprises: a second partition component 15 configured to partition the space in the box body assembly 1 into the first cavity A and the second cavity C, wherein there is a preset gap L between a first end of the second partition component 15 that is close to the venting channel B along a height direction z of the battery 100 and a first end of the box body assembly 1 that is located on the same side.

Among them, the second partition component 15 may be provided perpendicular to the first direction x to partition the space within the box body assembly 1 into the first cavity A and the second cavity C along the first direction x, with the battery cell 2 being disposed within the second cavity C. For example, the second pressure relief component 21 and the electrode terminal 242 of the battery cell 2 are provided on the same side, both facing upward.

In this embodiment, a preset gap L is provided between the first end of the second partition component 15 along the height direction z of the battery 100 and the first end of the box body assembly 1 that is located on the same side, so that in the event of thermal runaway of the battery cell 2, the discharges smoothly enter the first cavity A from the second cavity C through the preset gap L, which can prevent the pressure in the second cavity C from being too high, thereby improving safety in the event of thermal runaway.

In some embodiments, the second pressure relief component 21 is provided facing the first end of the box body assembly 1, with the venting channel B being formed between the battery cell 2 and the first end of the box body assembly 1.

Among them, the space formed between the top of the battery cell 2 and the top wall 13A may serve as the venting channel B, in which case discharges of thermal runaway of the battery cell 2 may directly enter the venting channel B and enter the second cavity C through the preset gap L between the second partition component 15 and the box body assembly 1.

In this embodiment, the venting channel B is provided in the second cavity C without separating the venting channel B from the second cavity C, which allows the discharges to spread quickly from the second cavity C into the venting channel B in the event of thermal runaway of the battery cell 2 in order to instantly reduce the pressure in the second cavity C, thereby improving safety in the event of thermal runaway.

In some embodiments, as shown in FIG. 3, the first blocking component 4 comprises a baffle 4A, the baffle 4A being configured to cause airflow to bypass an edge of the baffle 4A to reach the first pressure relief component 3.

Here, one or more baffles 4A may be provided and connected to the box body assembly 1. The baffle 4A may be in the form of a single flat plate or a single curved plate, or in the form of at least two flat plates, at least two curved plates, or a flat plate connected to a curved plate, for example, two flat plates connected to form an L-shaped plate, a T-shaped plate, and so on. The baffle 4A may be provided facing the first pressure relief component 3, and in order to prevent the discharges from reaching the first pressure relief component 3 directly, the projection of at least part of the baffle 4A on the wall face where the first pressure relief component 3 is located covers the first pressure relief component 3.

Specifically, the first cavity A and the second cavity C are provided side by side along the first direction x, the first pressure relief component 3 is provided on the side wall 11A of the first cavity A far from the second cavity B, and the baffle 4A may be provided perpendicularly to the first direction x or provided in an inclined manner.

In this embodiment, by providing a baffle 4A as the blocking component, the airflow is made to bypass the edge when passing through the baffle 4A to form a meandering flow path instead of directly reaching the first pressure relief component 3, thereby prolonging the flow path for the airflow to reach the first pressure relief component 3, which facilitates reducing the temperature of the discharges to a level less than the kindling point of the combustible fume, thus preventing an external fire from occurring after the discharges are discharged through the first pressure relief component 3. Moreover, on the basis of playing a blocking role, the baffle 4A can reduce the occupied space so as to maximize the space in the first cavity A for accommodating the discharges, thus reducing the pressure in the first cavity A in the event of thermal runaway of the battery cell 2, thereby improving the safety of the operation of the battery 100.

In some embodiments, the box body assembly 1 comprises a plurality of side walls 11A, and the first blocking component 4 comprises a baffle 4A, with one end of the baffle 4A being connected to one of the side walls 11A and the other end of the baffle 4A being a free end.

In this embodiment, the connection of one end of the baffle 4A to the side wall 11A enables the baffle 4A to be mounted more securely, and by means of the connection with the side wall 11A, the flow of the discharges through this side is blocked so that the discharges can only bypass the free end of the baffle 4A to reach the first pressure relief component 3, which can guide the flow of the discharges in accordance with a predetermined path to achieve the purpose of prolonging the flow path.

In some embodiments, as shown in FIG. 3, the first cavity A and a region where the battery cell 2 is located are provided side by side along a first direction x, and the first blocking component 4 comprises at least two baffles 4A arranged spaced apart along the first direction x, two adjacent ones of the baffles 4A being provided in a misaligned manner along a second direction y, with the second direction y being perpendicular to the first direction x.

Here, the misaligned arrangement means that at least two baffles 4A arranged along the first direction x are not provided directly opposite to each other, and a channel for the discharges to enter is formed between the respective free ends of two baffles 4A adjacent along the first direction x, wherein these two free ends may have overlapping segments in order to prolong a path for the discharges to reach the first pressure relief component 3, thereby preventing the discharges from flowing directly to the first pressure relief component 3; or that the two free ends may be arranged spaced apart from each other along the second direction y, wherein the baffle 4A in such a structure shall extend along the second direction y beyond the first pressure relief component 3.

In this embodiment, by providing at least two baffles 4A on the flow path of the discharges and providing two adjacent baffles 4A in a misaligned manner, the discharges can be guided to form a meandering flow path, which further prolongs the path for the discharges in the first cavity A to reach the first pressure relief component 3 and reduces the amount of discharges directly reaching the first pressure relief component 3, thereby gradually lowering the temperature of the discharges during the flow process, which facilitates lowering the temperature of the discharges to a level less than the kindling point of the combustible fume, thus preventing an external fire from occurring after the discharges are discharged through the first pressure relief component 3, thereby improving the safety of the operation of the battery 100.

In some embodiments, at least two first pressure relief components 3 are provided.

Here, the at least two first pressure relief components 3 may be located on the same wall of the box body assembly 1, or on different walls.

In this embodiment, by providing at least two first pressure relief components 3, it is possible that if one of the first pressure relief components 3 fails to open reliably, the discharges can still be released to the outside of the box body assembly 1 through the other first pressure relief components 3, thereby increasing the reliability of pressure relief, and if the plurality of first pressure relief components 3 can all be opened reliably, the discharges can be released simultaneously through the plurality of first pressure relief components 3, so that the air pressure inside the box body assembly 1 can be reduced instantly to prevent the box body assembly 1 from expanding, and the speed at which the discharges are discharged can be reduced, so as to prevent the discharges from causing a large impact on other components outside the battery 100.

In some embodiments, the first pressure relief component 3 is provided on a cavity wall of the first cavity A that is far from the battery cell 2.

Here, the cavity wall of the first cavity A far from the battery cell 2 may be a side wall 11A of the box body assembly 1, or may be a bottom wall 12A or a top wall 13A.

In this embodiment, the first pressure relief component 3 is located at a position far from the region in which the battery cell 2 is placed, so that after the discharges enter the first cavity A through the venting channel B in the event of thermal runaway of the battery cell 2, they will flow in a direction away from the battery cell 2 to reach the first pressure relief component 3, which minimizes the impact of the high-temperature discharges on the battery cell 2.

In some embodiments, the box body assembly 1 comprises a plurality of side walls 11A, and the first pressure relief component 3 is provided on the side wall 11A of the first cavity A that is opposite a region where the battery cell 2 is located.

Specifically, the first cavity A and the second cavity C are provided side by side along the first direction x, and the first pressure relief component 3 is provided on a side wall 11A of the first cavity A far from the second cavity C along the first direction x.

In this embodiment, the first pressure relief component 3 is provided on a side wall 11A far from the region where the battery cell 2 is located, so that after the discharges enter the first cavity A through the venting channel B in the event of thermal runaway of the battery cell 2, they will flow in a direction away from the battery cell 2 to reach the first pressure relief component 3, which minimizes the impact of the high-temperature discharges on the battery cell 2; moreover, the side wall 11A has a higher strength, and there is also sufficient space to dispose the first pressure relief component 3.

In some embodiments, at least two first pressure relief components 3 are provided, the at least two first pressure relief components 3 being provided spaced apart along a second direction y, the second direction y being perpendicular to a height direction z of the battery 100.

As shown in FIG. 3, the second partition component 15 separates the space within the box body assembly 1 into the first cavity A and the second cavity B provided side by side along the first direction x, and at least two first pressure relief components 3 are provided on the side wall 11A far from the second cavity C and spaced apart along the second direction y.

For example, at least one third partition component 16 is provided in the box body assembly 1 along the second direction y, and the third partition component 16 extends along the first direction x to separate the inner cavity of the box body assembly 1 along the second direction y into at least two accommodating regions for placing battery modules 2', where in each of the accommodating regions, at least one battery module 2' may be provided along the first direction x, and the at least two first pressure relief components 3 are provided in correspondence with the at least two accommodating regions.

In this embodiment, at least two first pressure relief components 3 are provided spaced apart along the second direction y, so that if the pressure inside the box body assembly 1 is too high, the discharges can be released to the outside of the battery simultaneously through the at least two first pressure relief components 3, which can rapidly reduce the temperature and the pressure inside the battery 100, thereby improving the safety of the battery 100; moreover, each pressure relief component 3 may correspond to a battery cell 2 in a different region, which can reduce the pressure of the discharges released from each pressure relief component 3, thereby reducing the impact and damage to other components outside the battery 100 after the discharges are released.

In some embodiments, the first blocking component 4 comprises at least two baffle groups 4B provided in correspondence with the at least two first pressure relief components 3, respectively, each of the baffle groups 4B comprising: a first plate 41, a first end of the first plate 41 being connected to a region of the side wall 11A that is located between two adjacent ones of the first pressure relief components 3, and a second end of the first plate 41 being a free end; and a second plate 42 provided along a first direction x on a side of the first plate 41 that is far from the first pressure relief components 3, a first end of the second plate 42 being connected to the side wall 11A, and a second end of the second plate 42 being a free end, wherein the first plate 41 and the second plate 42 are provided in a misaligned manner in the second direction y and have overlapping segments.

Among them, the baffle groups 4B corresponding to the at least two first pressure relief components 3 are provided spaced apart along the second direction y. In each baffle group 4B, the first plate 41 is located in a region between two adjacent first pressure relief components 3, allowing the discharges to flow towards the corresponding first pressure relief component 3; and the respective first ends of the first plate 41 and the second plate 42 are connected to the side wall 11A, which prevents the flow of the discharges from the respective first ends of the first plate 41 and the second plate 42, so that the discharges reach the first pressure relief component 3 after bypassing the second end of the second plate 42 and the second end of the first plate 41. The first plate 41 and the second plate 42 have overlapping segments in the second direction y that allow the discharges to reach the first pressure relief component 3 via a meandering path, and the misaligned arrangement of the first plate 41 and the second plate 42 in the second direction y allows the discharges to reach the first pressure relief component 3 smoothly.

In this embodiment, the baffle groups 4B can guide the discharges to form meandering flow paths and flow to corresponding first pressure relief components 3, so that the discharges entering the first cavity A can be distributed to flow towards the at least two first pressure relief components 3, which can prevent the local pressure in the first cavity A from being too high and help reduce the temperature of the discharges, thus preventing an external fire from occurring after the discharges are discharged through the first pressure relief components 3, thereby improving the safety of the operation of the battery 100.

In some embodiments, the second end of the first plate 41 extends beyond a corresponding one of the first pressure relief components 3 along the second direction y; and/or the second end of the second plate 41 extends beyond a corresponding one of the first pressure relief components 3 along the second direction y. In this embodiment, the projection of the first plate 41 and/or the second plate 42 on the wall where the first pressure relief component 3 is provided covers the first pressure relief component 3, which can reliably prevent the discharges in the first cavity A from reaching the first pressure relief component 3 directly, so that the discharges need to bypass the free ends of the first plate 41 and the second plate 42 to reach the first pressure relief component 3, thereby forming a meandering flow path, and by prolonging the flow path of the discharges, the temperature of the discharges can be reduced.

In some embodiments, the first end of the first plate 41 and the first end of the second plate 42 are separately connected to adjacent ones of the side walls 11A.

Here, in order to realize such a connection, the first plate 41 and/or the second plate 42 may be provided in a curved or bent structure so as to function as an airflow blocker on the basis of the connection with the side wall 11A.

In this embodiment, by providing the first plate 41 between two adjacent first pressure relief components 3, it can serve a blocking function and also facilitate mounting of the second plate 42, which can simplify the structure of the second plate 42.

In some embodiments, as shown in FIG. 3, the first plate 41 is in an L-shape, and two adjacent ones of the first plates 41 are provided spaced apart or in contact along the second direction y.

Here, for any one of the baffle groups 4B, a vertical portion of the L-shaped first plate 41 extends along the first direction x and a first end of the vertical portion is connected to a region of the side plate 11A that is located between two adjacent first pressure relief components 3, and a horizontal portion of the L-shaped first plate 41 extends along the second direction y and a first end of the horizontal portion is connected to a second end of the vertical portion, and the second end of the horizontal portion extends to maintain a preset spacing from the side wall 11A. The second plate 42 is located between the second cavity C and the first plate 41 along the first direction x, the first end of the second plate 42 is connected to the side wall 11A adjacent to the first pressure relief component 3, the second plate 42 extends along the second direction y and does not extend beyond the vertical portion of the first plate 41, and the second end of the second plate 42 has an overlapping segment with the second end of the horizontal portion of the first plate 41.

In the case where two adjacent first plates 41 are in contact along the second direction y, these two first plates 41 form a T-shaped structure.

In this embodiment, the first plate 41 can not only be conveniently connected to the side wall 11A, but also define the flow path for the discharges together with the second plate 42.

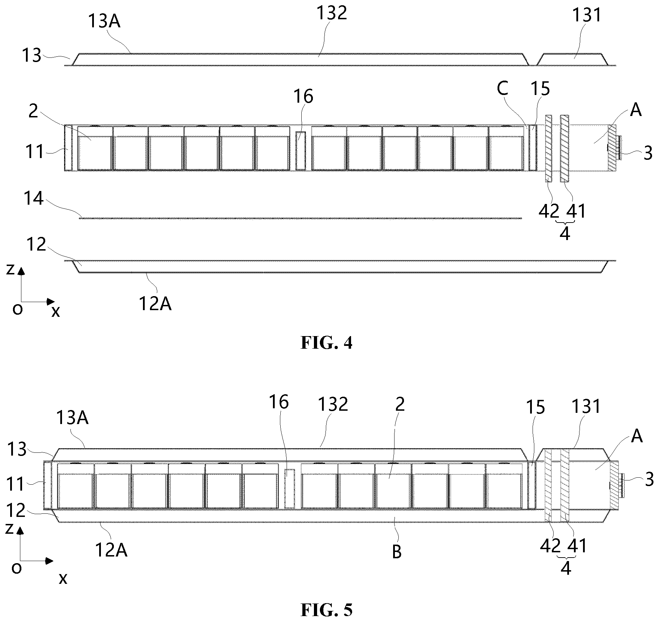

In some embodiments, as shown in FIG. 5, at least one end of the first blocking component 4 along the height direction z of the battery 100 is abutted against the box body assembly 1.

Here, the first blocking component 4 may have one end abutting the top wall 13A, or the other end abutting the bottom wall 12A, or the two ends abutting the top wall 13A and the bottom wall 12A, respectively. Specifically, at least one end of each baffle 4A along the height direction z of the battery 100 is abutted against the box body assembly 1. Specifically, both ends of each of the first plate 41 and the second plate 42 along the height direction z of the battery 100 are abutted against the box body assembly 1.

In this embodiment, it is possible to avoid direct arrival of a portion of the discharges to the first pressure relief component 3 from the end portion of the first blocking component 4 that is along the height direction z of the battery 100, and to enable a vast portion of the discharges in the first cavity A to flow to the first pressure relief component 3 under the guidance of the first blocking component 4, thus making it possible to ensure prolonging a flow path for the discharges in the first cavity A to reach the first pressure relief component 3 in order to gradually reduce the temperature of the discharges during the flow process, which facilitates the reduction of the temperature of the discharges to a level less than the kindling point of the combustible fume, thus preventing an external fire from occurring after the discharges are discharged through the first pressure relief component 3, thereby improving the safety of the operation of the battery 100.

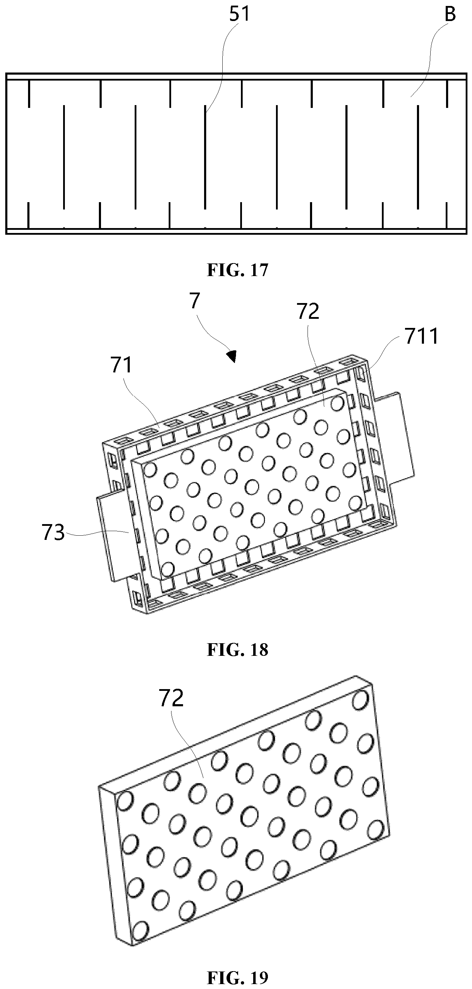

In some embodiments, as shown in FIG. 17, the battery 100 further comprises a second blocking component 51 provided in the venting channel B, which is configured to prolong a flow path for the discharges in the venting channel B.

Here, the second blocking component 51 may comprise at least one baffle provided within the venting channel B. For example, where a plurality of baffles are provided, the plurality of baffles may be provided in a misaligned manner. Optionally, as shown in FIG. 5, the region formed by enclosure of the first partition component 14 and the box body assembly 1 forms the venting channel B as a whole, and the baffle is provided directly within the venting channel B.

In this embodiment, by providing a second blocking component 51 in the venting channel B, it is possible to prolong the flow path for the discharges in the venting channel B to further reduce the temperature of the discharges, which facilitates the reduction of the temperature of the discharges to a level less than the kindling point of the combustible fume, thus preventing an external fire from occurring after the discharges are discharged through the first pressure relief component 3, thereby improving the safety of the operation of the battery 100.

In some embodiments, the box body assembly 1 comprises: a first partition component 14, the first partition component 14 separating the venting channel B from the second cavity C along a height direction z of the battery 100; and the battery 100 further comprises a support member 5 provided in the venting channel B, the support member 5 being configured to support the first partition component 14.

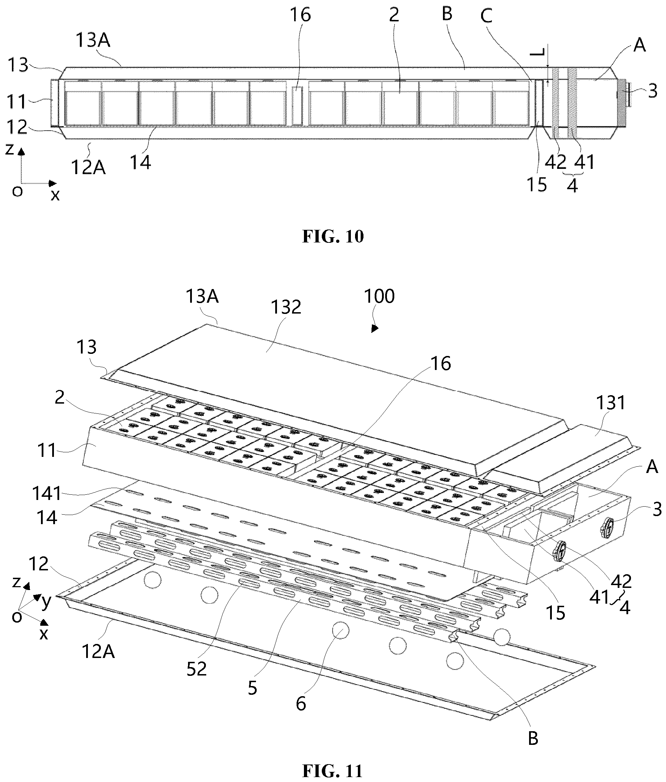

Here, as shown in FIG. 11, a plurality of support members 5 are provided in the region formed by enclosure between the first partition component 14 and the box body assembly 1, wherein the plurality of support members 5 are provided spaced apart along the second direction y, and the plurality of support members 5 are used to jointly support the first partition component 14.

The support members 5 are in the form of a hollow tubular structure and extend in the first direction x, the space between two adjacent support members 5 forms the venting channel B, and each support member 5 corresponds to one row of battery cells 2. For example, the cross section of the support member 5 may be circular, oval or polygonal, or the like. Moreover, a plurality of second venting portions 52 are provided spaced apart along the first direction x on the support member 5. Optionally, the second venting portions 52 may be through holes; or weak portions that may be damaged under the effect of high temperature or high pressure, so that in the case of thermal runaway of the battery cell 2 in which discharges are released, the weak portions may be damaged by the high-temperature discharges to form through holes. For example, the second venting portions 52 may be round, oval, oblong, or polygonal, or the like. In the event of thermal runaway of the battery cell 2, discharges released from the battery cell 2 may enter the inner cavity of the support member 5 through the second venting portion 52 facing the battery cell 2, and enter the venting channel B through the second venting portion 52 located at the side portion.

In this embodiment, by providing the support member 5 in the venting channel B, it is possible to jointly provide good support to the first partition component 14, so as to prevent the first partition component 14 from deforming, thereby providing a good support effect to the battery cell 2 placed on the first partition component 14. Moreover, the support member 5 may also function as a second blocking component 51 that may enable temperature reduction of the discharges as they flow in the venting channel B.

In some embodiments, as shown in FIG. 11, the battery 100 further comprises a cooling component 6 provided in the box body assembly 1, the cooling component 6 being configured to absorb heat in the box body assembly 1.

In this embodiment, by providing a cooling component 6, it is possible to actively absorb heat in the box body assembly 1, so as to reduce the temperature of the discharges during the flow process in the case of thermal runaway of the battery cell 2, which prevents an external fire from occurring after the discharges are discharged through the first pressure relief component 3, thereby improving the safety of the operation of the battery 100.

In some embodiments, the cooling component 6 is provided in at least one of the venting channel B and the first cavity A.

In this embodiment, by providing the cooling component 6 in the venting channel B, it is possible to enable temperature reduction of the discharges after they enter the venting channel B in the event of thermal runaway of the battery cell 2, which can reduce the impact of the high-temperature discharges on other battery cells 2 that have not experienced thermal runaway; and by providing the cooling component 6 in the first cavity A, it is possible to realize temperature reduction by the cooling component 6 while prolonging the flow path after the discharges are accumulated into the first cavity A in the event of thermal runaway of the battery cell 2, so that rapid cooling of the discharges in the first cavity A can be realized.

In some embodiments, the cooling component 6 comprises an encapsulation member and a cooling medium provided in the encapsulation member, the cooling medium being configured to absorb heat by means of phase transition of the cooling medium.

Here, the cooling medium may be a liquid cooling medium such as water that changes to a gas after phase transition and heat absorption; or the cooling medium may be a solid cooling medium that changes to a liquid or gas after phase transition and heat absorption.

In this embodiment, temperature reduction is conducted by means of phase transition and heat absorption of the cooling medium, which enables rapid temperature reduction inside the battery 100, and the cooling medium is provided inside the encapsulation member, and thus can avoid any influence on the operation of the battery cell 2.

In some embodiments, as shown in FIGS. 18 and 19, the battery 100 further comprises a filtering component 7 provided in the box body assembly 1 at a position corresponding to the first pressure relief component 3, the filtering component 7 being configured to filter the discharges before they are discharged through the first pressure relief component 3.

Here, the filtering component 7 may be provided on the inner wall of the box body assembly 1 at a position corresponding to the first pressure relief component 3. The discharges may include sparks, fumes, or other solid particles.

In this embodiment, in the event of thermal runaway of the battery cell 2, by filtering solid particles from the discharges with the filtering component 7 before the discharges reach the first pressure relief component 3, it is possible to prevent the solid particles in the discharges from blocking the first pressure relief component 3, thereby improving the safety of the operation of the battery 100.

In some embodiments, the filtering component 7 comprises: an accommodating member 71, the accommodating member 71 being mounted in the box body assembly 1, the accommodating member 71 having a cavity and being provided with a plurality of through holes 711 in a wall face, and the plurality of through holes 711 being configured to cause the discharges to enter the cavity after filtered.

Here, the accommodating member 71 may be in a box-like structure with an opening at one end, for example, in the form of a rectangular structure, wherein the end of the accommodating member 71 having the opening is provided facing the first pressure relief component 3; the accommodating member 71 is provided with mounting portions 73 on both sides for fixing the accommodating member 71 to the box body assembly 1; and the accommodating member 71 may have through holes 711 distributed throughout the entire wall face to allow the discharges to enter the cavity smoothly and to allow solid particles larger in size than the through holes 711 to remain outside the accommodating member 71.

In this embodiment, solid particles in the discharges that are larger in size than the through holes 711 can be filtered to remain outside the accommodating member 71, which can prevent large-sized solid particles from blocking the first pressure relief component 3, thereby improving the safety of the operation of the battery 100.

In some embodiments, the filtering component 7 further comprises: an adsorption member 72 provided in the cavity, the adsorption member 72 being configured to adsorb solid particles from the discharges in the cavity.

Here, the adsorption member 72 may be a porous adsorbent material, such as a sponge or the like. After the discharges enter the cavity of the accommodating member 71, solid particles that are smaller in size than the through holes 711 can be adsorbed by the adsorption member 72.

In this embodiment, after the discharges enter the cavity through the through holes 711 on the accommodating member 71, solid particles that are larger in size than the through holes 711 are filtered out and remain outside the accommodating member 71, while solid particles that are smaller in size than the through holes 711 are adsorbed through the adsorption member 72, thereby preventing the high-temperature solid particles from blocking the first pressure relief component 3 as much as possible, thus improving the safety of the operation of the battery 100.

Four embodiments of the battery 100 of the present application will be given below.

In a first embodiment, as shown in FIGS. 2 to 7, the box body assembly 1 comprises: an accommodating portion 11, a first cover body 12, and a second cover body, wherein the accommodating portion 11 is of a rectangular structure formed by enclosure of a plurality of sidewalls 11A, e.g., four sidewalls 11A, and the first cover body 12 and the second cover body 13 are used to close the openings at the two ends of the accommodating portion 11, respectively, the first cover body 12 having a bottom wall 12A and the second cover body 13 having a top wall 13A. Both the first cover body 12 and the second cover body 13 may be designed as a flange structure for fixing with the accommodating portion 11, for example by means of fasteners, welding or bonding.

The box body assembly 1 further comprises a first partition component 14, a second partition component 15 and a third partition component 16. The first partition component 14 is perpendicular to the height direction z of the battery 100 and, along the first direction x, the first end of the first partition component 14 is connected to the side wall 11A and the second end is connected to the second partition component 15, which means that the second edge has a preset distance from the side wall 11A; and two ends of the first partition component 14 along the second direction y are both connected to two opposing side walls 11A. The first partition component 14 may be connected at a position where the first cover body 12 is connected to the accommodating portion 11. The second partition component 15 is provided perpendicular to the first direction x, the second partition component 15 has a preset distance from the side wall 11A that is far from the battery cell 2, and a first end of the second partition component 15 can be extended to abut against the top wall 13A and a second end of the second partition component 15 can be connected to the second end of the first partition component 14 along the first direction x. The second partition component 15 separates the first cavity A and the second cavity C along the first direction x, and the cavity formed by enclosure between the first partition component 14 and the first cover body 12 forms the venting channel B as a whole. The second cavity C is provided with a plurality of battery cells 2, and third partition components 16 may be provided in the second cavity C to separate the second cavity C into a plurality of accommodating cavities, a plurality of battery modules 2' being provided in one-to-one correspondence in the plurality of accommodating cavities. For example, the two third partition components 16 are in a criss-cross structure and a total of four battery modules 2' are provided. A plurality of battery cells 2 in each battery module 2' may be electrically connected in series, parallel or mixed. The first partition component 14 supports the plurality of battery cells 2, and the second pressure relief component 21 of the battery cell 2 is provided facing the first partition component 14, i.e., the second pressure relief component 21 is disposed downwards.

A first venting portion 141 is provided on the first partition component 14 in a position corresponding to the second pressure relief component 21 of each battery cell 2. For example, the first venting portion 141 is a through hole. The second cover body 13 is provided with a first protruding portion 131 in a region corresponding to the first cavity A and a second protruding portion 132 in a region corresponding to the second cavity B, and a region on the second cover body 13 located between the first protruding portion 131 and the second protruding portion 132 is connected to the top end of the second partition component 15.

The box body assembly 1 is provided with two first pressure relief components 3 on a side wall 11A far from the second cavity C along the first direction x, the two first pressure relief components 3 being spaced apart along the second direction y. The first cavity A is provided with a first blocking component 4, the first blocking component 4 comprising two baffle groups 4B provided in correspondence with the two first pressure relief components 3, respectively, where each baffle group 4B comprises a first plate 41 and a second plate 42, and the two ends of the first blocking component 4 along the height direction z of the battery 100 are abutted against the top wall 13A and the bottom wall 12A.

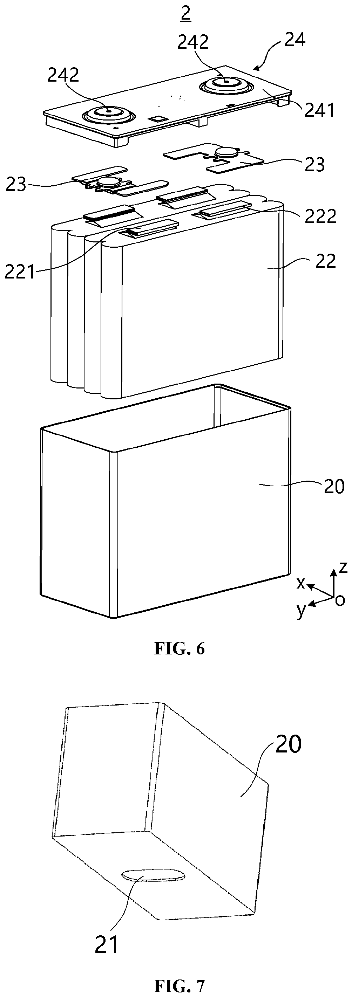

As shown in FIG. 6, the battery cell 2 includes a case 20, an electrode assembly 22, two adapters 23, and an end cover assembly 24. Among them, the case 20 is provided with an opening at one end, the electrode assembly 22 is disposed within the case 20, and the end cover assembly 24 is used to close the opening of the case 20. Along the first direction x, one electrode assembly 22 may be provided, or a plurality of electrode assemblies may be provided in a stack, the electrode assembly 22 comprising a first tab 221 and a second tab 222. The end cover assembly 24 includes an end cover body 241 and two electrode terminals 242 of opposite polarities disposed on the end cover body 241, and the first tab 221 and the second tab 222 are each electrically connected to an electrode terminal 242 of the same polarity in correspondence by one adapter 23. As shown in FIG. 7, the case 20 is provided with a second pressure relief component 21 on an end face far from the end cover assembly 24.

When thermal runaway occurs in the battery cell 2, the high-temperature materials inside are discharged through the second pressure relief component 21 and enter the venting channel B through the first venting portion 141, and then enter the first cavity A through the opening of the venting channel B at the position adjoining the first cavity A, and for the discharges in the first cavity A, the flow path is prolonged under the guiding effect of the first blocking component 4, thereby reducing the temperature of the discharges.

In a second embodiment, as shown in FIGS. 8 to 10, the difference from the first embodiment is that the second pressure relief component 21 of the battery cell 2 is provided facing the second cover body 13, i.e., upwards. The first cover body 12 is provided with a third protruding portion 121 in a region corresponding to the first cavity A and a fourth protruding portion 122 in a region corresponding to the second cavity B, and a portion of the first cover body 12 located between the third protruding portion 121 and the fourth protruding portion 122 is connected to the bottom end of the second partition component 15, and the four edges of the first partition component 14 are connected to the four edges of the fourth protruding portion 122, respectively, and the first partition component 14 is used to support the plurality of battery cells 2 without affecting the height of the first cavity A. There is a preset gap between the top end of the second partition component 15 and the second cover body 13, and the second partition component 15 separates the first cavity A and the second cavity C along the first direction x, wherein the second cavity C is provided with the battery cell 2 and supports it by the first partition component 14, and the region in the second cavity C located between the battery cell 2 and the second cover body 13 forms the venting channel B as a whole.

When thermal runaway occurs in the battery cell 2, the high-temperature materials inside are discharged through the second pressure relief component 21 and enter the venting channel B directly, and then enter the first cavity A through the preset gap between the second partition component 15 and the second cover body 13, and for the discharges in the first cavity A, the flow path is prolonged under the guiding effect of the first blocking component 4, thereby reducing the temperature of the discharges.

In the third embodiment, as shown in FIGS. 11 to 13, the difference from the first embodiment is as follows: a plurality of support members 5 are provided in the cavity formed between the first partition component 14 and the first cover body 12, wherein the plurality of support members 5 are provided spaced apart along the second direction y, each of the support members 5 extends along the first direction x, the length of the support members 5 is the same as the dimension of the first partition component 14 along the first direction x, and the inner space of the support members 5 serves as the venting channel B. The support member 5 is provided with a plurality of second venting portions 52 spaced apart along the first direction x, and the second venting portions 52 provided on the wall of the support member 5 that faces the first partition component 14 correspond in position to the first venting portions 141 on the first partition component 14. The support member 5 may be provided with second venting portions 52 on different side walls along the circumferential direction. The end of each support member 5 facing the first cavity A is in communication with the first cavity A.

The support member 5 may have a variety of structural forms.

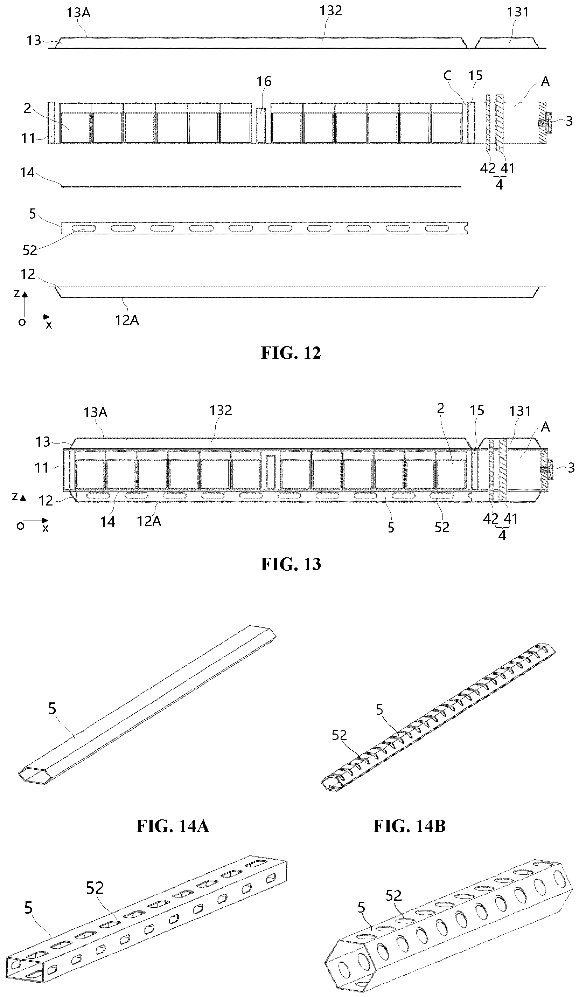

As shown in FIG. 14A, the support member 5 has a hexagonal cross section, the top and bottom faces of the hexagonal shape being provided horizontally, and the second venting portion 52 may be designed as a weak portion that is damaged by the high-temperature discharges to form a through hole only in the event of thermal runaway of the battery cell 2. Within the cavity of the support member 5, a plurality of cooling components 6 may be provided spaced apart in the length direction thereof to cool down the discharges as they flow through the venting channel B.

As shown in FIG. 14B, the support member 5 has a hexagonal cross section, the top and bottom faces of the hexagonal shape being provided horizontally, and the second venting portion 52 may be designed as a through slot, which is disposed in the top wall of the support member and extends to two side walls adjoining the top wall, so as to allow the discharges to enter the venting channel B smoothly. Within the cavity of the support member 5, a plurality of cooling components 6 may be provided spaced apart in the length direction thereof to cool down the discharges as they flow within the support member 5.

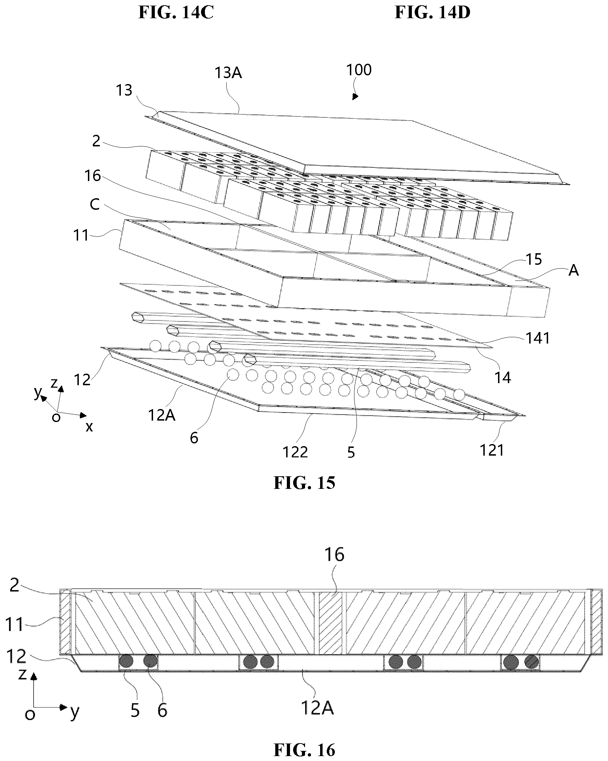

As shown in FIG. 14C, the support member 5 has a rectangular cross section, and the second venting portions 52 may be disposed on at least one side wall of the support member 5. For example, the second venting portions 52 may be provided on all four side walls. The second venting portions 52 may be designed as through holes. For example, the through holes may be obround holes, round holes or polygonal holes, etc., to allow the discharges to enter the venting channel B smoothly. Within the cavity of the support member 5, a plurality of cooling components 6 may be provided spaced apart in the length direction thereof to cool down the discharges as they flow within the support member 5.

As shown in FIG. 14D, the support member 5 has a hexagonal cross section, such as a square hexagon, the top and bottom faces of the hexagonal shape being provided horizontally, and the second venting portions 52 may be disposed on at least one of the side walls of the support member 5, wherein there must be second venting portions provided on the top wall, while on the other side walls, the second venting portions 52 are optionally provided, so as to allow the discharges to enter the venting channel B smoothly. Within the cavity of the support member 5, a plurality of cooling components 6 may be provided spaced apart in the length direction thereof to cool down the discharges as they flow within the support member 5.

When thermal runaway occurs in the battery cell 2, the high-temperature materials inside are discharged through the second pressure relief component 21 and enter the venting channel B of the corresponding support member 5 through the first venting portion 141 and the second venting portion 52, and then enter the first cavity A through the opening of the venting channel B at the position adjoining the first cavity A, and for the discharges in the first cavity A, the flow path is prolonged under the guiding effect of the first blocking component 4, thereby reducing the temperature of the discharges.

In the fourth embodiment, as shown in FIGS. 15 to 16, the difference from the second embodiment is as follows: a plurality of support members 5 are provided in the cavity formed between the first partition component 14 and the first cover body 12, wherein the plurality of support members 5 are provided spaced apart along the second direction y, each of the support members 5 extends along the first direction x, the length of the support members 5 is the same as the dimension of the first partition component 14 along the first direction x, and the inner space of the support members 5 serves as the venting channel B. The support member 5 is provided with a plurality of second venting portions 52 spaced apart along the first direction x, and the second venting portions 52 provided on the wall of the support member 5 that faces the first partition component 14 correspond in position to the first venting portions 141 on the first partition component 14. The second venting portions 52 are weak portions, which are closed in the normal operating state of the battery cell 2 and are only damaged in the state of thermal runaway of the battery cell 2. The end of each support member 5 facing the first cavity A is in communication with the first cavity A. Within each venting channel B, two cooling components 6 are provided spaced apart along the second direction y. For any of the above embodiments, in order to achieve a superior effect of lowering the temperature of the discharges when the battery 100 undergoes thermal runaway, a second blocking component 51 may be further provided in the venting channel B on the basis of the provision of the first blocking component 4, and/or a filtering component 7 may be provided in a position corresponding to the first pressure relief component 3.

The applicant has conducted a large number of tests, and for batteries of different energy densities 100, the temperatures of the discharges released from the second pressure relief component 21 are different, and after optimizing the flow path of the discharges by means of the scheme of the present application, the temperatures of the discharges released from the first pressure relief component 3 are all less than 450°C (the kindling point of the methane, which is the main component of the thermal runaway gas, is about 500°C), which prevents an external fire from occurring after the discharges have been discharged through the first pressure relief component 3, thereby increasing the safety of the operation of the battery 100.

While the present application has been described with reference to the preferred embodiments, various modifications may be made and components therein may be replaced with equivalents without departing from the scope of the present application. In particular, the technical features mentioned in the various embodiments can be combined in any manner as long as there is no structural conflict. The present application is not limited to the specific embodiments disclosed herein, but rather includes all technical solutions falling within the scope of the claims.

## Claims

1. A battery (100), comprising:
a box body assembly (1), the box body assembly (1) being internally provided with a first cavity (A) and a venting channel (B) that are in communication with each other, wherein the first cavity (A) is provided with a first pressure relief component (3) on a cavity wall;
a battery cell (2) provided in the box body assembly (1) and located outside the first cavity (A), the battery cell (2) having a second pressure relief component (21), wherein the second pressure relief component (21) is configured to release discharges from the battery cell (2) into the venting channel (B) such that the discharges enter the first cavity (A) and are discharged via the first pressure relief component (3) to the outside of the battery (100); and
a first blocking component (4) provided in the first cavity (A), the first blocking component (4) being configured to prolong a path for the discharges in the first cavity (A) to reach the first pressure relief component (3).

2. The battery (100) according to claim 1, wherein the box body assembly (1) is further internally provided with a second cavity (C), the battery cell (2) being provided in the second cavity (C), and the second cavity (C) being in communication with the venting channel (B), or the second cavity (C) being in communication with the venting channel (B) when the battery cell (2) is releasing the discharges.

3. The battery (100) according to claim 2, wherein the venting channel (B) and the second cavity (C) are independent of each other.

4. The battery (100) according to claim 3, wherein the box body assembly (1) comprises a first partition component (14), the first partition component (14) separating the venting channel (B) from the second cavity (C) along a height direction (z) of the battery (100).

5. The battery (100) according to any one of claims 2-4, wherein the first cavity (A) and the second cavity (C) are provided side by side along a first direction (x), the first direction (x) being perpendicular to a height direction (z) of the battery (100).

6. The battery (100) according to claim 5, wherein the box body assembly (1) comprises a second partition component (15), the second partition component (15) separating the first cavity (A) from the second cavity (C) along the first direction (x).

7. The battery (100) according to claim 6, wherein along the height direction (z) of the battery (100), a wall face of the box body assembly (1) that is away from the venting channel (B) protrudes outwardly in a region where the first cavity (A) is located to form a first protruding portion (131) and protrudes outwardly in a region where the second cavity (C) is located to form a second protruding portion (132), with a portion of the box body assembly (1) that is located between the first protruding portion (131) and the second protruding portion (132) being fixed to the second partition component (15).

8. The battery (100) according to any one of claims 1-6, wherein along a height direction (z) of the battery (100), a wall face of the box body assembly (1) that is away from the venting channel (B) protrudes outwardly in a region where the first cavity (A) is located to form a first protruding portion (131).

9. The battery (100) according to any one of claims 2-6, wherein along a height direction (z) of the battery (100), a wall face of the box body assembly (1) that is away from the venting channel (B) protrudes outwardly in a region where the second cavity (C) is located to form a second protruding portion (132).

10. The battery (100) according to claim 2, wherein the venting channel (B) is provided in the second cavity (C).

11. The battery (100) according to claim 10, wherein the box body assembly (1) comprises a second partition component (15) configured to divide the space in the box body assembly (1) into the first cavity (A) and the second cavity (C), wherein a preset gap (L) is defined between a first end of the second partition component (15) that is close to the venting channel (B) along a height direction (z) of the battery (100) and a first end of the box body assembly (1) that is located on the same side.

12. The battery (100) according to claim 11, wherein the second pressure relief component (21) is positioned facing the first end of the box body assembly (1), with the venting channel (B) being formed between the battery cell (2) and the first end of the box body assembly (1).

13. The battery (100) according to any one of claims 1-12, wherein the first blocking component (4) comprises a baffle (4A), the baffle (4A) being configured to cause an airflow to bypass an edge of the baffle (4A) to reach the first pressure relief component (3).

14. The battery (100) according to any one of claims 1-13, wherein the box body assembly (1) comprises a plurality of side walls (11A), and the first blocking component (4) comprises a baffle (4A), with one end of the baffle (4A) being connected to one of the side walls (11A) and the other end of the baffle (4A) being a free end.

15. The battery (100) according to any one of claims 1-14, wherein the first cavity (A) and a region where the battery cell (2) is located are provided side by side along a first direction (x), and the first blocking component (4) comprises at least two baffles (4A) spaced apart along the first direction (x), two adjacent ones of the baffles (4A) being arranged in a misaligned manner along a second direction (y), the second direction (y) being perpendicular to the first direction (x).

16. The battery (100) according to any one of claims 1-15, wherein at least two of said first pressure relief components (3) are provided.

17. The battery (100) according to any one of claims 1-16, wherein the first pressure relief component (3) is provided on a cavity wall of the first cavity (A) that is away from the battery cell (2).

18. The battery (100) according to any one of claims 1-17, wherein the box body assembly (1) comprises a plurality of side walls (11A), and the first pressure relief component (3) is provided on the side wall (11A) of the first cavity (A) that is opposite to a region where the battery cell (2) is located.

19. The battery (100) according to claim 18, wherein at least two of said first pressure relief components (3) are provided, the at least two first pressure relief components (3) being provided spaced apart along a second direction (y), the second direction (y) being perpendicular to a height direction (z) of the battery (100).

20. The battery (100) according to claim 19, wherein the first blocking component (4) comprises at least two baffle groups (4B) provided in correspondence with the at least two first pressure relief components (3), respectively, each of the baffle groups (4B) comprising:
a first plate (41), a first end of the first plate (41) being connected to a region of the side wall (11A) that is located between two adjacent ones of the first pressure relief components (3), and a second end of the first plate (41) being a free end; and
a second plate (42) provided along a first direction (x) on a side of the first plate (41) that is away from the first pressure relief components (3), a first end of the second plate (42) being connected to the side wall (11A), and a second end of the second plate (42) being a free end,
wherein the first plate (41) and the second plate (42) are arranged in a misaligned manner in the second direction (y) and have overlapping segments.

21. The battery (100) according to claim 20, wherein:
the second end of the first plate (41) extends beyond a corresponding one of the first pressure relief components (3) along the second direction (y); and/or
the second end of the second plate (41) extends beyond a corresponding one of the first pressure relief components (3) along the second direction (y).

22. The battery (100) according to claim 20 or 21, wherein the first end of the first plate (41) and the first end of the second plate (42) are separately connected to adjacent ones of the side walls (11A).

23. The battery (100) according to any one of claims 20-22, wherein the first plate (41) is in an L-shape, and two adjacent ones of the first plates (41) are spaced apart or in contact along the second direction (y).

24. The battery (100) according to any one of claims 1-23, wherein at least one end of the first blocking component (4) along a height direction (z) of the battery (100) abuts against the box body assembly (1).

25. The battery (100) according to any one of claims 1-24, further comprising a second blocking component (51) provided in the venting channel (B), the second blocking component (51) being configured to prolong a flow path for the discharges in the venting channel (B).

26. The battery (100) according to any one of claims 1-25, wherein the box body assembly (1) comprises a first partition component (14), the first partition component (14) separating the venting channel (B) from a second cavity (C) along a height direction (z) of the battery (100); and the battery (100) further comprises a support member (5) provided in the venting channel (B), the support member (5) being configured to support the first partition component (14).

27. The battery (100) according to any one of claims 1-26, further comprising a cooling component (6) provided in the box body assembly (1), the cooling component (6) being configured to absorb heat in the box body assembly (1).

28. The battery (100) according to claim 27, wherein the cooling component (6) is provided in at least one of the venting channel (B) and the first cavity (A).

29. The battery (100) according to claim 27 or 28, wherein the cooling component (6) comprises an encapsulation member and a cooling medium provided in the encapsulation member, the cooling medium being configured to absorb heat by means of phase transition.

30. The battery (100) according to any one of claims 1-29, further comprising a filtering component (7) provided in the box body assembly (1) at a position corresponding to the first pressure relief component (3), the filtering component (7) being configured to filter the discharges before they are discharged through the first pressure relief component (3).

31. The battery (100) according to claim 30, wherein the filtering component (7) comprises an accommodating member (71), the accommodating member (71) being mounted in the box body assembly (1), the accommodating member (71) having a cavity and being provided with a plurality of through holes (711) in a wall face, and the plurality of through holes (711) being configured to allow the discharges to enter the cavity after being filtered.

32. The battery (100) according to claim 31, wherein the filtering component (7) further comprises an adsorption member (72) provided in the cavity, the adsorption member (72) being configured to adsorb solid particles from the discharges in the cavity.

33. An electrical apparatus comprising the battery (100) according to any one of claims 1-32, the battery (100) being configured to provide electrical energy to the electrical apparatus.
